# EUROPÄISCHE PATENTSCHRIFT

(11) **EP 0 711 593 B1**
(45) Veröffentlichungstag und Bekanntmachung des Hinweises auf die Patenterteilung: **13.01.1999**
(21) Anmeldenummer: 95810694.0
(22) Anmeldetag: 07.11.1995
(51) Int. Cl.: B01J 2/16

(54) **Verfahren und Einrichtung zum Herstellen und/oder Behandeln von Teilchen**
Process and device for preparing and/or treating particles
Procédé et installation pour la préparation et/ou le traitement des particules

(30) Priorität: 14.11.1994 CH 3393/94
(43) Veröffentlichungstag der Anmeldung: 15.05.1996
(73) Patentinhaber: GLATT GMBH, 79589 Binzen (DE)
(72) Erfinder: Luy, Bernhard, Dr., D-79295 Sulzburg (DE); König, Ulf, Dr., D-76137 Karlsruhe (DE); Tondar, Matthias, D-78966 Hausen i.W. (DE)
(74) Vertreter: Eder, Carl E.

(56) Entgegenhaltungen:
- EP-A- 0 141 437
- EP-A- 0 149 266
- EP-A- 0 388 867
- EP-A- 0 526 394

## Beschreibung

Die Erfindung betrifft ein Verfahren und eine Einrichtung zum Herstellen und/oder Behandeln von Teilchen.

Das Verfahren und die Einrichtung können beispielsweise dazu dienen, um in festem, trockenem oder feuchtem Zustand in eine Prozesskammer eingebrachte Teilchen in von unten nach oben durch die Prozesskammer hindurchgeleitetem Gas zu bewegen, zum Beispiel zu verwirbeln und/oder auf einem Rotor zu bewegen, und durch Zersprühen einer Flüssigkeit in der Prozesskammer einen Überzug auf die Teilchen aufzubringen und/oder um die ursprünglich vorhandenen Teilchen zu grösseren Teilchen zu agglomerieren - d.h. durch Aufbaugranulation zu granulieren - sowie zu trocknen. Die Flüssigkeit kann zum Beispiel mindestens ein organisches Lösungs- und/oder Dispersionsmittel und/oder als Lösungs- und/oder Dispersionsmittel dienendes Wasser aufweisen aus einer Lösung bestehen und/oder eine disperse Phase enthalten und als Überzugsmaterial oder Bindemittel dienen. Falls zu agglomerierende Teilchen bereits ein sich in festem Zustand befindendes, in einem Lösungsmittel lösliches Bindemittel enthalten, kann es ausreichen, als Flüssigkeit lediglich das genannte Lösungsmittel auf die Teilchen aufzusprühen.

Es besteht jedoch auch die Möglichkeit, die festen Teilchen erst in der Prozesskammer zu bilden. Hierzu kann als Flüssigkeit eine Lösung in der Prozesskammer in Tröpfchen zersprüht werden, aus denen nach einem Trocknungsprozess die festen Teilchen entstehen. Diese können dann eventuell ebenfalls noch mit einem Überzug versehen und/oder agglomeriert werden.

Aus der US-A 4 621 437 sind Wirbelschicht-Einrichtungen bekannt, bei denen eine zum Aufnehmen der Teilchen dienende Prozesskammer, eine Gasumwälzvorrichtung und ein Wärmeaustauscher zusammen einen Gaskreislauf bilden. Der Gaskreislauf hat eine Abzweigung, die mit einer Vakuum-Saugpumpe und einem Kondensator für die Lösungsmittelrückgewinnung verbunden ist. Die Prozesskammer enthält eine Sprühdüse, die über eine Pumpe mit einem Flüssigkeitsreservoir verbunden ist.

Den Sprühdüsen der aus der US-A 4 621 437 bekannten Einrichtungen wird bei der Benutzung der Sprühdüsen lediglich die zu zersprühende ein organisches Lösungsmittel aufweisende Flüssigkeit, aber weder Luft noch ein anderes Gas zugeführt. Diese Sprühdüsen bestehen also aus Einstoffdüsen. Da der Gas-Druck in der Prozesskammer unter dem normalen Luftdruck liegt, wird die zersprühte Flüssigkeit ziemlich rasch eingetrocknet. Bei der Verwendung einer Einstoffdüse besteht daher insbesondere bei intermittierender Zersprühung eines flüssigen Überzugsmaterials oder Bindemittels die Gefahr, dass Flüssigkeitströpfchen in der Umgebung des Flüssigkeitsauslasses der Sprühdüse an dieser haften bleiben sowie trocknen und/oder dass Teilchen aus der Wirbelschicht an der Düse ankleben. Dadurch können die Zerstäubungseigenschaften der Sprühdüse in ungünstiger Weise beeinflusst werden, so dass zum Beispiel viele Flüssigkeitströpfchen wesentlich grösser als vorgesehen sind. Dies bewirkt beim Überziehen von Teilchen eine lokale Überfeuchtung von Teilchen und fördert dadurch eine meistens unerwünschte Agglomeration. Zudem kann die Sprühdüse sogar ganz verstopft werden.

Bei anderen konventionellen Wirbelschicht-Verfahren werden die Teilchen mit einem Gas verwirbelt, dessen Druck ungefähr gleich dem normalen Umgebungs-Luftdruck oder ein wenig grösser als dieser ist. Bei diesem konventionellen Verfahren ist es an sich bekannt, die auf die Teilchen aufzubringende Flüssigkeit mit einer Zweistoff-Sprühdüse zu zersprühen. Dieser wird zusätzlich zur Flüssigkeit, deren Druck ungefähr gleich den Umgebungs-Luftdruck ist, noch Druckluft oder ein anderes Druckgas mit einem Druck zugeführt, der grösser als derjenige der Flüssigkeit ist und üblicherweise etwa 200 kPa bis 500 kPa beträgt.

Es sei hierzu zum Beispiel auf die EP-A 0 388 867 verwiesen. Diese offenbart ein Verfahren zur Herstellung eines Granulats in einer Wirbelschicht, die sich in einer Prozesskammer befindet. Diese bildet zusammen mit einem Ventilator einen Kreislauf, in welchem durch den Ventilator ein Gas, nämlich Stickstoff umgewälzt wird. Eine Pumpe pumpt zeitweise eine wässrige Dispersion oder Lösung zu einer Zweistoffdüse, wobei die Pumpe offenbar zum Dosieren der Flüssigkeit dient. Ferner wird der Zweistoffdüse, mit einem Kompressor aus dem Kreislauf abgezweigter Stickstoff zugeführt, um die Flüssigkeit zu zerstäuben. Die EP-A 0 388 867 enthält keine Angabe über den Druck des Stickstoffes in der Prozesskammer und den Druck des der Zweistoffdüse zugeführten Gases. Es scheint jedoch plausibel, dass diese Drücke ähnliche Werte wie bei anderen bekannten, konventionellen Granulier-Verfahren haben und dass der Druck in der Prozesskammer also ungefähr gleich dem normalen Umgebungs-Luftdruck oder ein wenig grösser als dieser ist und dass der Druck des der Zweistoffdüse zugeführten Gases ungefähr 200 bis 500 kPa beträgt.

Das umgewälzte Gas wird vor dem Eintritt in die Prozesskammer vorzugsweise auf eine Temperatur von 90°C bis 180°C und beispielsweise 120°C bis 150°C erhitzt. Eine solche Erhitzung des Gases hat jedoch den Nachteil, dass hitzeempfindliche Guter Schaden nehmen können. Wenn der Druck des Gases in der Prozesskammer ungefähr gleich dem normalen Luftdruck ist, beträgt die Siedetemperatur von Wasser ungefähr 100°C, so dass ein Verzicht auf eine Erhitzung des umgewälzten Gases sehr lange Trocknungszeiten zur Folge hätte. Ferner ist das bekannte Verfahren nur für die Bildung von Produkten vorgesehen und geeignet, die durch Zersprühen einer wässrigen Lösung oder Dispersion hergestellt werden können.

Wenn jedoch das zum Verwirbeln der Teilchen durch die Prozesskammer geförderte Gas einen deutlich unter dem normalen Luftdruck liegenden Druck hätte und zum Beispiel im wesentlichen aus überhitztem Dampf mindestens eines organischen Lösungsmittels besteht, hätte das Zersprühen einer Flüssigkeit mit Hilfe einer üblichen Zweistoff-Sprühdüse durch Zuführen von einem unter einem Druck von beispielsweise 200 bis 500 kPa stehenden Gas den Nachteil, dass beim Zersprühen eine grosse Menge Luft oder anderes Gas - beispielsweise Stickstoff - aus der Druckgasquelle in die Prozesskammer gelangt. Dies hätte wiederum die Nachteile zur Folge, dass die Einrichtung mit einer relativ grossen und teuren Vakuum-Saugpumpe ausgerüstet werden müsste, die beim Zersprühen von Flüssigkeit viel Energie benötigen würde, um in der Prozesskammer den gewünschten, unter dem Umgebungs-Luftdruck liegenden Druck aufrecht zu erhalten. Ferner und vor allem ergäbe sich der Nachteil, dass eine grosse, aufwendige und beim Betrieb viel Energie verbrauchende Lösungsmittel-Rückgewinnungsvorrichtung vorgesehen werden müsste, um den Lösungsmitteldampf in dem von der Saugpumpe aus dem Kreislauf abgesaugten Gas durch Abkühlen des letzteren zu verflüssigen, vom restlichen Gas zu trennen und zu sammeln. Wenn der Lösungsmittel-Rückgewinnungsvorrichtung pro Zeiteinheit eine grosse Menge Gas zugeführt wird, das beispielsweise Luft oder Stickstoff und organischen Lösungsmitteldampf enthält, ist es zudem schwierig, den Austritt von organischem Lösungsmittel in die Umgebung vollständig zu vermeiden oder zumindest die austretende Lösungsmittelmenge ausreichend niedrig zu halten.

Aus der EP-A 0 526 394 ist ein Verfahren zum Beschichten von Teilchen bekannt. Diese befinden sich in einer Prozesskammer und bilden ein auf einer rotierenden Scheibe aufliegendes Teilchen-Bett. Mit einem Ventilator wird Luft aus der Umgebung durch einen die Scheibe umschliessenden Ringspalt und die Prozesskammer hindurchgesaugt. Ein in das Teilchen-Bett hineinragendes Sprühorgan besitzt eine Düse, die in der Art einer üblichen Zweistoffdüse ausgebildet ist. Das Sprühorgan besitzt noch eine äussere Hülse, welche die Zweistoffdüse umschliesst und mit dieser zusammen einen Durchgang bildet. Die äussere Hülse ist an ihrem sich beim Auslass der Düse befindenden Ende vollständig offen und hat eine zylindrische Innenfläche, die sich bis zum genannten offenen Ende erstreckt. Zum Beschichten der Teilchen wird der Zweistoffdüse ein geschmolzenes Überzugsmaterial und ein zum Zersprühen von diesem dienendes, aus komprimierter Luft bestehendes Sprüh-Gas zugeführt. Ferner wird Luft aus der Umgebung durch den zwischen der Zweistoffdüse und der äusseren Hülse vorhandenen Durchgang hindurch in die Prozesskammer hineingesaugt, um das Teilchen-Bett vor dem Auslass der Düse aufzulockern und die mit geschmolzenem Überzugsmaterial besprühten Teilchen zu kühlen.

Bei diesem bekannten Verfahren wird also nicht eine Flüssigkeit mit einem organischen Lösungsmittel, sondern ein geschmolzenes Material, beispielsweise Wachs, zersprüht. Da die durch die Prozesskammer gesaugte Luft nicht in einem geschlossenen Gaskreislauf umgewälzt wird, wäre es bei dem aus der EP-A 0 526 394 bekannten Verfahren auch praktisch gar nicht zulässig, ein organisches Lösungsmittel zu zersprühen. Da bei diesem bekannten Verfahren auch kein geschlossener Gaskreislauf vorhanden ist, wird selbstverständlich auch kein Gas aus dem Gaskreislauf abgesaugt. Im übrigen ergibt sich bei diesem bekannten Verfahren zwar in der Prozesskammer wegen des beim Ansaugen von Luft aus der Umgebung entstehenden Druckgefälles ein Druck, der um eine Druckdifferenz kleiner ist, als der Umgebungs-Luftdruck. Diese Druckdifferenz ist jedoch nur sehr klein. Zudem strömt viel Sprüh-Gas durch die Zweistoffdüse hindurch in die Prozesskammer, so dass es praktisch fast nicht möglich wäre, in der Prozesskammer einen signifikant unter dem Umgebungs-Luftdruck liegenden Druck zu erzeugen.

Der Erfindung liegt daher die Aufgabe zugrunde, ein Verfahren und eine Einrichtung zum Herstellen und/oder Behandeln von Teilchen zu schaffen und Nachteile der bekannten Verfahren sowie Einrichtungen zu vermeiden. Es soll insbesondere ausgehend von dem aus der EP-A-0 388 867 bekannten Stand der Technik ermöglicht werden, die Teilchen schonend bei tiefen Temperaturen und trotzdem schnell zu trocknen sowie Produkte wirtschaftlich herzustellen, welche die Zersprühung einer ein organisches Lösungs- und/oder Dispersionsmittel enthaltenden Flüssigkeit in der Prozesskammer erfordern. Dabei soll vermieden werden, dass das Zersprühen von Flüssigkeit durch an der bzw. mindestens einer Sprühdüse anhaftendes Material gestört und dadurch zum Beispiel beim Überziehen von Teilchen eine unerwünschte Agglomeration gefördert wird oder dass die bzw. mindestens eine Sprühdüse sogar ganz verstopft wird. Dieses Ziel soll dabei erreicht werden, ohne den apparativen Aufwand und den Energieverbrauch für die Aufrechterhaltung eines gewünschten, unter dem Umgebungs-Luftdruck liegenden Druckes in der Prozesskammer und für die Rückgewinnung des bzw. jedes gegebenenfalls in dem dem Gaskreislauf entzogenen Gas vorhandenen, organischen Lösungs- und/oder Dispersionsmittels wesentlich zu vergrössern.

Diese Aufgabe wird gemäss der Erfindung durch ein Verfahren mit den Merkmalen des Anspruchs 1 und durch eine Einrichtung mit den Merkmalen des Anspruchs 10 erreicht.

Vorteilhafte Weiterbildungen des Verfahrens und der Einrichtung gehen aus den abhängigen Ansprüchen hervor.

Beim erfindungsgemässen Verfahren wird im Gaskreislauf Gas umgewälzt, dessen Druck in der Prozesskammer und vorzugsweise im ganzen Gaskreislauf unter dem Umgebungs-Luftdruck bzw. Atmosphärendruck liegt. Der Druck des in der Prozesskammer und im restlichen Gaskreislauf vorhandenen Gases beträgt vom Beginn der Umwälzung von Gas oder spätestens vom Beginn der Zersprühung von Flüssigkeiten an bis zum Ende der Umwälzung von Gas höchstens 80 kPa, vorzugsweise höchstens 50 kPa, zum Beispiel höchstens 30 kPa und zum Beispiel mindestens 5 kPa oder mindestens 10 kPa.

Gemäss der Erfindung wird Gas aus dem Gaskreislauf zum Gasdurchgang der Sprühdüse geleitet und durch einen deren Düsenkörper beim Flüssigkeitsauslass im Querschnitt umschliessenden Abschnitt des Gasdurchgangs der Sprühdüse in die Prozesskammer geleitet. Dieses Gas bildet bei zweckmässiger Festlegung der Verfahrensparameter eine die aus dem Flüssigkeitsauslass ausströmende Flüssigkeit im Querschnitt mehr oder weniger umhüllende Gashülle. Dieses Gas schirmt die Sprühdüse und insbesondere die Aussenfläche des Düsenkörpers in der Umgebung des Flüssigkeitsauslasses des Düsenkörpers ab und verhindert, dass Flüssigkeitströpfchen in der Umgebung des Flüssigkeitsauslasses auf die Sprühdüse auftreffen. Desgleichen verhindert das aus der Sprühdüse in die Prozesskammer strömende Gas, dass in der Prozesskammer vorhandene Teilchen sich in der Nähe des Flüssigkeitsauslasses der Sprühdüse an dieser anlagern.

Wenn der Gas-Druck in der Prozesskammer wesentlich unter dem normalerweise ungefähr 100 kPa betragenden Umgebungs-Luftdruck liegt, kann die in der Prozesskammer zersprühte Flüssigkeit sehr schnell eintrocknen. Ferner können auch die Teilchen schnell getrocknet werden. Trotz solcher schnellen Trocknungsvorgänge wird durch die Erfindung vollständig oder zumindest weitgehend verhindert, dass die Zerstäubungseigenschaften der Sprühdüse durch sich im Flüssigkeitsauslass oder in dessen Nähe an der Sprühdüse anlagerndes Material beeinträchtigt werden oder dass die Sprühdüse gar verstopft wird. Die Aufrechterhaltung der Zerstäubungseigenschaften - wie beispielsweise der Grössen der gebildeten Flüssigkeitströpfchen - bei längerem und/oder intermittierendem Zersprühen von Flüssigkeit trägt zur Gewährleistung einer guten Qualität der hergestellten Produkte bei und verkleinert insbesondere beim Überziehen von Teilchen die Gefahr einer unerwünschten Agglomeration.

Da das der Sprühdüse zugeleitete Gas aus dem Gaskreislauf stammt, vergrössert es die Menge des insgesamt im Gaskreislauf vorhandenen Gases nicht. Dementsprechend verursacht dieses Gas auch keinen Mehraufwand der apparativen Mittel und der Energie, die erforderlich sind, um im Gaskreislauf einen gewünschten, unter dem Umgebungs-Luftdruck bzw. Atmosphärendruck liegenden Druck aufrecht zu erhalten und um das bzw. jedes allenfalls in dem dem Gaskreislauf entzogenen Gas vorhandene, organische Lösungs- und/oder Dispersionsmittel zurück zu gewinnen, d. h. zu verflüssigen und zu sammeln.

Die zu zersprühende Flüssigkeit wird der Sprühdüse mit einem Druck zugeführt werden, der mindestens 500 kPa, besser mindestens 1 MPa, vorzugsweise höchstens 10 MPa und zum Beispiel 3 MPa bis 6 MPa beträgt.

Der Düsenkörper der Sprühdüse kann ähnlich wie bei einer konventionellen Einstoffdüse ausgebildet sein, so dass die Zerstäubung der Flüssigkeit im wesentlichen durch den Druck bewirkt wird, mit dem die Flüssigkeit der Düse zugeführt wird. Für die eigentliche Zerstäubung muss der Sprühdüse also kein Gas zugeführt werden. Es ist daher ausreichend, der Sprühdüse ausschliesslich das dem genannten Gasdurchgang zugeführte Gas zuzuführen, das im wesentlichen nur zum Abschirmen der Sprühdüse dient und nichts oder zumindest praktisch nichts zur Zersprühung der Flüssigkeit beiträgt.

Untersuchungen haben überraschenderweise gezeigt, dass der Druck des dem Gasdurchgang der Sprühdüse zugeleiteten Gases wesentlich kleiner als der Druck der der Sprühdüse zugeführten Flüssigkeit sein kann und nur wenig höher sein muss als der Druck des durch die Prozesskammer strömenden Gases, um die Sprühdüse ausreichend gegen ein Festhaften von zersprühter Flüssigkeit und/oder Teilchen zu schützen. Der Druck des der Sprühdüse zugeführten Gases beträgt daher spätestens ab dem Beginn der Zersprühung von Flüssigkeit und vorzugsweise während der ganzen Dauer, während der Gas in die Sprühdüse geleitet wird, gleich wie der Druck im Gaskreislauf zweckmässigerweise höchstens 80 kPa, vorzugsweise höchstens 50 kPa und zum Beispiel höchstens ungefähr 30 kPa. Der Druck des dem Gasdurchgang der Sprühdüse zugeführten Gases ist hochstens 20 kPa oder vorzugsweise sogar nur höchstens 15 kPa und zum Beispiel höchstens 10 kPa sowie zum Beispiel mindestens 1 kPa grösser als der Druck des in der Prozesskammer vorhandenen Gases. Dementsprechend kann zum Beispiel eine relativ kleine, einfache und preisgünstige Gasfördervorrichtung verwendet werden, um Gas aus dem Gaskreislauf zur Sprühdüse zu fördern. Die Gasfördervorrichtung braucht den Druck des von ihr geförderten Gases nur relativ wenig, zum Beispiel mindestens 1 kPa sowie höchstens 10 kPa zu erhöhen und verbraucht dementsprechend nur wenig Energie. Die Gasfördervorrichtung besteht vorzugsweise aus einem einstufigen Drehkolbenverdichter, zum Beispiel aus einem Roots-Gebläse. Es sei jedoch angemerkt, dass auch eine andersartige Gasfördervorrichtung vorgesehen werden könnte, die zum Beispiel einen Turboverdichter bzw. Ventilator aufweist.

Das Verfahren und die Einrichtung gemäss der Erfindung sind vor allem für Fälle vorgesehen, bei denen für die Bildung und/oder Behandlung von Teilchen eine Flüssigkeit zersprüht werden muss, die ein organisches Lösungs- und/oder Dispersionsmittel aufweist, das im Verlauf des Verfahrens - d.h. normalerweise bereits beim Zersprühen der Flüssigkeit und auf jeden Fall nachher beim Trocknen der Teilchen - teilweise oder mindestens annähernd vollständig verdampft. Die Flüssigkeit kann zum Beispiel Aceton, Ethanol, Toluol, Hexan, n-Pentan oder ein Gemisch von mindestens zwei dieser Stoffe enthalten. Organische Lösungsmittel können zusammen mit Luft ein explosionsfähiges Gemisch bilden. Ein solches Gemisch kann jedoch nur explodieren, wenn dessen Druck mindestens gleich einem Mindestzünddruck ist. Dieser liegt für viele gebräuchliche organische Lösungsmittel im Bereich von ungefähr 20 kPa bis ungefähr 60 kPa. Beim erfindungsgemässen Verfahren bzw. beim Betrieb der erfindungsgemässen Einrichtung wird der Druck des Gases vorzugsweise vor dem Beginn der Gasumwälzung und bevor eine mindestens ein organisches Lösungs- und/oder Dispersionsmittel enthaltende Flüssigkeit zersprüht wird im ganzen Gaskreislauf auf einen unter dem Mindestzünddruck des vorhandenen Lösungsmittels bzw. Lösungsmittelzusatzes liegenden Wert gesenkt und während der ganzen Dauer der Umwälzung von Gas auf diesem Wert gehalten. Zudem ist vorzugsweise auch der Druck des der Sprühdüse zugeführten Gases während der ganzen Dauer der Einleitung von Gas in die Sprühdüse oder spätestens ab dem Beginn der Zersprühung von Flüssigkeit kleiner als der Mindestzünddruck, so dass auch bei einer unbeabsichtigten, lokalen Erhitzung des Gemisches auf oder über dessen Mindestzündtemperatur weder im Gaskreislauf noch in der Sprühdüse Explosionen ausgelöst werden können.

Die zersprühte Flüssigkeit kann auch als Lösungs- und/oder Dispersionsmittel dienendes Wasser aufweisen. Im übrigen können in festem Zustand in die Prozesskammer eingebrachte Teilchen eventuell schon mindestens ein organisches Lösungsmittel und/oder Wasser enthalten.

Die Siedetemperatur eines organischen und/oder Wasser aufweisenden Lösungs- und/oder Dispersionsmittels ist vom Druck im Gaskreislauf abhängig und wird bei abnehmendem Druck kleiner. Wenn der Druck in der Prozesskammer auf einen unter dem Umgebungs-Luftdruck liegenden Wert reduziert wird, kann dadurch die zum Trocknen der besprühten Teilchen erforderliche Gastemperatur gesenkt werden, was zum Beispiel beim Behandeln von thermolabilen, auf erhöhte Temperaturen empfindlichen Stoffen - wie pharmazeutischen Wirkstoffen - vorteilhaft sein. Zudem ergibt die Senkung der Gastemperatur auch eine Reduktion der verbrauchten Heizenergie.

Beim Agglomerieren, d. h. bei der Aufbau-Granulation von Teilchen kann ein niedriger, unter dem Umgebungs-Luftdruck liegender Druck des durch die Prozesskammer strömenden Gases zudem ermöglichen, dass die bei der Aufbau-Granulation entstehenden Teilchen d.h. Granalien verhältnismässig kleine Grössen haben, was in gewissen Fällen wünschenswert ist.

Der Erfindungsgegenstand wird nun anhand in der Zeichnung dargestellter Ausführungsbeispiele näher beschrieben. In der Zeichnung zeigt,
die Fig. 1 eine schematische, teils im Schnitt, teils in Ansicht gezeichnete Einrichtung mit einem einen Siebboden aufweisenden Gut-Behälter,
die Fig. 2 die Sprühdüse der Einrichtung in grösserem Massstab, teils im Schnitt, teils in Ansicht,
die Fig. 3 einen Schnitt durch den sich in den Figuren 1 und 2 oben befindenden Endabschnitt der Sprühdüse in noch grösserem Massstab als in der Fig. 2 und
die Fig. 4 einen Schnitt durch einen Teil eines Gut-Behälters, der einen Rotor anstelle eines Siebbodens besitzt.

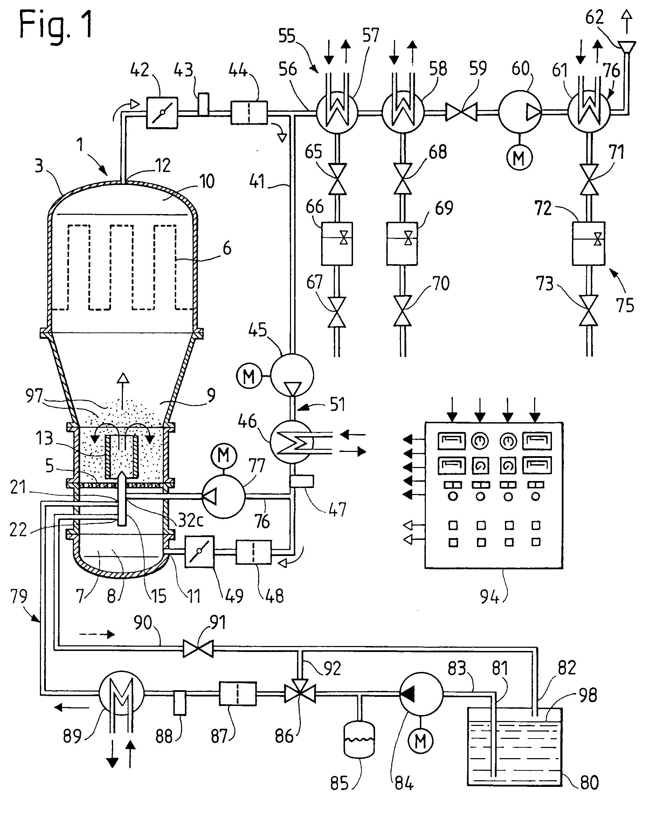

Die in der Fig. 1 ersichtliche Einrichtung 1 besitzt einen Gut-Behälter 3, der im allgemeinen rotationssymmetrisch zu einer vertikalen Achse ist und eine aus mehreren lösbar miteinander verbundenen Teilen bestehende Wandung hat. Im unteren Teil des Behälters 3 ist ein gasdurchlässiger Siebboden 5 angeordnet. Der obere Teil des Behälters enthält ein gasdurchlässiges Filter 6. Der gasdicht gegen die Umgebung abgeschlossene Innenraum 7 des Behälters wird durch den Siebboden 5 und das Filter 6 in drei Bereiche unterteilt, nämlich von unten nach oben in eine Gaseinlasskammer 8, eine Prozesskammer 9 und eine Gasauslasskammer 10. Der Behälter 3 ist mit einem in die Gaseinlasskammer 8 mündenden Gaseinlass 11 und mit einem mit der Gasauslasskammer 10 verbundenen Gasauslass 12 versehen. In der Prozesskammer 9 ist eine hohlzylindrische, zur Behälterachse koaxiale, an beiden Enden offene, auch etwa als Wurster-Einsatz bezeichnete Hülse 13 in kleinem Abstand vom Siebboden 5 mit nicht gezeichneten Befestigungsmitteln lösbar und beispielsweise vertikal verstellbar an der Wandung des Behälters 3 befestigt.

Die Einrichtung 1 besitzt eine Sprühvorrichtung mit mindestens einer Sprühdüse 15. Diese ist koaxial zur Achse des Behälters 3 lösbar und zum Beispiel vertikal verstellbar in diesem befestigt. Die Sprühdüse 15 durchdringt den Siebboden 5 und ragt mit ihrem zum Zersprühen einer Flüssigkeit dienenden Ende ein wenig in die Hülse 13 hinein, während sich ihre noch beschriebenen Anschlüsse unterhalb des Siebbodens befinden.

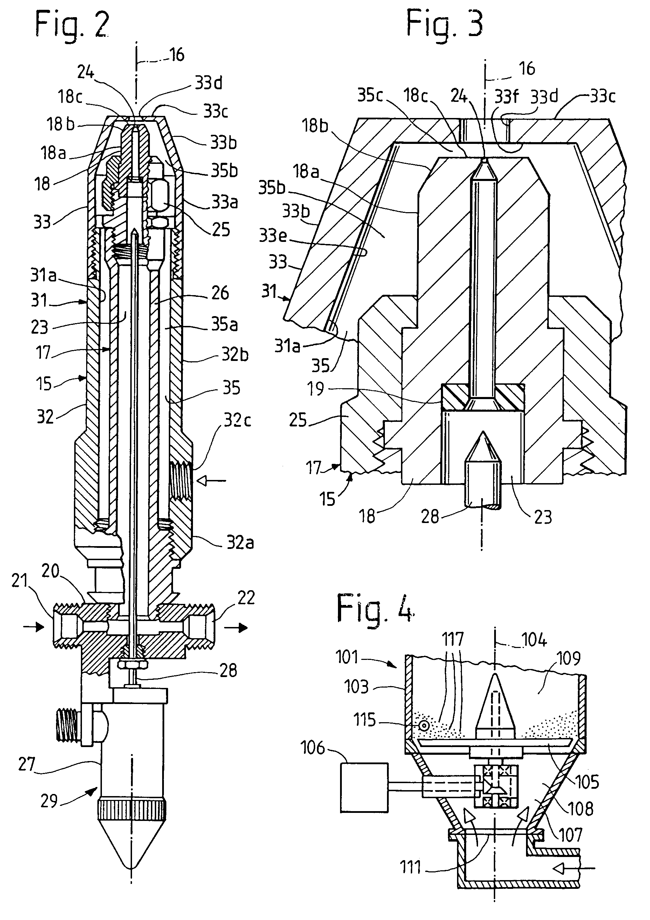

Die separat in der Fig. 2 und zum Teil in der Fig. 3 gezeichnete Sprühdüse ist im allgemeinen rotationssymmetrisch zu einer Achse 16 und besitzt einen mehrteiligen Düsenkörper 17. Dieser hat an seinem sich in den Figuren 1, 2 und 3 oben befindenden Ende ein Mundstück 18, das einen zylindrischen Aussenflächenabschnitt 18a, einen sich von diesem und vom restlichen Düsenkörper 7 weg verjüngenden, konischen Aussenflächenabschnitt 18b und an seinem oberen dem restlichen Düsenkörper abgewandten Ende eine ebene, zur Achse 16 rechtwinklige Stirnfläche 18c besitzt. Das Mundstück 18 ist mit einer Überwurfmutter 25 lösbar an einer den längsten Teil des Düsenkörpers bildenden, an beiden Enden offenen Hülse 26 befestigt. Der Düsenkörper 17 weist ein zur Achse 16 koaxiales Loch auf. Der vom Mundstück 18 gebildeter Teil dieses Lochs besitzt insbesondere von unten nach oben einen ersten zylindrischen Abschnitt, einen zweiten, engeren zylindrischen Abschnitt, einen sich nach oben verjüngenden konischen Abschnitt und einen dritten zylindrischen, in der Stirnfläche 18c endenden Abschnitt. Im ersten zylindrischen Abschnitt des Lochs des Mundstückes 18 ist ein als Ventilsitz 19 dienender, ringförmiger Einsatz angeordnet. Dieser besteht aus einem Kunststoff, nämlich einem fluorhaltigen Polymer, wie Polytetrafluoräthylen. Der Düsenkörper 17 und insbesondere dessen Mundstück 18 bestehen abgesehen von dem den Ventilsitz 19 bildenden Einsatz und abgesehen von allenfalls vorhandenen, nicht gezeichneten Dichtungen aus einem metallischen Material. Der Düsenkörper 17 ist in der Nähe seines dem Mundstück 18 abgewandten Ende mit einem Anschlussstück 20 versehen, das einen Flüssigkeitszuleitanschluss 21 und einen Flüssigkeitsableitanschluss 22 bildet. Die beiden Flüssigkeitsanschlüsse 21, 22 sind mit einem von den freien Bereichen des axialen Lochs des Düsenkörpers 17 gebildeten Flüssigkeitsdurchgang 23 verbunden. Der vom dritten, dünnsten, zylindrischen Abschnitt des Lochs des Mundstücks 18 gebildete Abschnitt des Flüssigkeitsdurchgangs 23 dient als Flüssigkeitsauslass 24. Dessen Mündung liegt in einer von der Stirnfläche 18c definierten Ebene und wird von der Stirnfläche 18c begrenzt sowie umschlossen. Der Flüssigkeitsdurchgang 23 ist in der Fig. 2 nur vereinfacht gezeichnet und kann eventuell in der Nähe des Flüssigkeitsauslasses 24 noch Mittel aufweisen, um der beim Betrieb durch ihn strömenden Flüssigkeit einen Drall zu verleihen. Der erste, weiteste, zylindrische Abschnitt des axialen Lochs des Mundstückes 18 könnte zum Beispiel noch einen nicht gezeichneten, hülsenförmigen Einsatz mit mindestens einer wendelförmigen Nut oder bezüglich der Achse 16 schrägen Kanälen oder dergleichen aufweisen.

Der Ventilsitz 19 hat einen sich zum Flüssigkeitsauslass 24 hin konisch verengenden Abschnitt und bildet zusammen mit einem am Anschlusstück 20 befestigten, pneumatischen Stellorgan 27 und einem durch diese verstellbaren, nämlich verschiebbaren, nadelförmigen Verschlusselement 28 Ventilmittel 29. Das nadelförmige Verschlusselement 28 ist an einem Ende mit dem Stellorgan 27 verbunden, ragt von aussen zur Achse 16 koaxial durch ein mit einer Stopfbuchse oder dergleichen abgedichtetes Loch des Anschlusstückes 20 in den Flüssigkeitsdurchgang 23 hinein und besitzt in diesen einen kegel- oder kegelstumpfförmigen, freien Endabschnitt. Das Verschlusselement 28 ist in der Fig. 2 in seiner Freigabestellung gezeichnet, in der es den Flüssigkeitsdurchgang 23 freigibt. Das Verschlusselement 28 kann durch das Stellorgan 27 entlang der Achse 16 über die in der Fig. 3 gezeichnete Zwischenstellung in eine Schliessstellung verschoben werden, in der der freie Endabschnitt des Verschlusselements 28 auf dem Ventilsitz 19 aufliegt, so dass das Verschlusselement den Flüssigkeitsdurchgang 23 zwischen den Anschlüssen 22, 23 und den Flüssigkeitsauslass 24 ziemlich nahe beim letzteren sperrt.

Der Düsenkörper 17 und sein Flüssigkeitsdurchgang 23 sind zum Beispiel ähnlich wie bei bekannten Einstoffdüsen ausgebildet. Die Sprühdüse 15 besitzt jedoch noch eine bei bekannten Einstoffdüsen nicht vorhandene Hülse 31, die eine Innenfläche 31a besitzt und aus zwei Hülsenteilen 32 und 33 besteht. Der eine, erste Hülsenteil 32 hat einen im Querschnitt mehrkantförmigen, lösbar und dicht am Düsenkörper 17 befestigten, nämlich mit diesem verschraubten Endabschnitt 32a und einen längeren und etwas dünneren, zylindrischen Abschnitt 32b. Der Endabschnitt 32a hat ein radiales, mit einem Innengewinde versehenes Loch, das als Anschluss für eine Gasleitung dient und den Gaseinlass 32c der Sprühdüse bildet.

Der zylindrische Abschnitt 32b ist durch ineinander geschraubte Gewinde lösbar mit einem zylindrischen Abschnitt 33a des anderen, zweiten Hülsenteils 33 verbunden. Der zweite Hülsenteil 33 ist kappenförmig und hat einen sich von seinem zylindrischen Abschnitt 33a weg verjüngenden, konischen Abschnitt 33b und eine ebene, zur Achse 16 rechtwinklige Stirnwand 33c. Diese ist durch einen Zwischenraum von der Stirntläche 18c des Mundstücks 18 getrennt und befindet sich also in bezug auf die Strömungsrichtung der bei der Benutzung der Sprühdüse zersprühten Flüssigkeit stromabwärts in Abstand vom Flüssigkeitsauslass 24. Die Stirnwand 33c hat ein zur Achse 16 und damit zum Flüssigkeitsauslass 24 koaxiales, beispielsweise zylindrisches Auslassloch 33d. Der kreisförmige Rand bzw. die Begrenzung des Auslasslochs 33d umschliesst den Rand bzw. die Begrenzung der Mündung des Flüssigkeitsauslasses 24 in einer zur Achse 16 parallelen Blickrichtung bzw. Projektion um die Achse 16 herum allseitig mit Abstand. Der Durchmesser des Auslasslochs 33d ist wesentlich grösser als der Durchmesser der engsten Stelle des Flüssigkeitsauslasses 24 und beträgt mindestens das Fünffache und vorzugsweise mindestens das Zehnfache des letztgenannten Durchmessers. Der Durchmesser der engsten Stelle des Flüssigkeitsauslasses beträgt zum Beispiel etwa 0,2 mm bis 0,4 mm. Der Durchmesser des Auslasslochs 33d beträgt dann zum Beispiel etwa 3 mm bis 8 mm. Wenn grosse Sprühraten vorgesehen sind oder wenn die zu zersprühende Flüssigkeit eine sehr grosse Viskosität hat oder eventuell eine disperse Phase enthält, können die Durchmesser des Flüssigkeitsauslasses und des Auslasslochs nötigenfalls grösser gemacht werden.

Der konische Abschnitt 33b des kappenförmigen Hülsenteils 33 ist aussen durch einen konischen Aussenflächenabschnitt und innen durch einen konischen Innenflächenabschnitt 33e der Hülse 31 begrenzt. Diese beiden konischen Flächenabschnitte verjüngen sich zum Auslassloch 33d hin, sind parallel zueinander sowie zur Achse 16 koaxial und bilden mit dieser einen Winkel von 10° bis 30° und beispielsweise ungefähr 20°. Die Stirnwand 33c bildet aussen einen ebenen Aussenflächenabschnitt und innen einen ebenen Innenflächenabschnitt 33f der Hülse 31. Der axiale Abstand der Stirnfläche 18c von dem dieser gegenüberstehenden Innenflächenabschnitt 33f ist grösser als der Durchmesser des engsten Abschnittes des Flüssigkeitsauslasses 24 sowie der von diesem engsten Abschnitt gebildeten Mündung des Flüssigkeitsauslasses und kleiner als der Durchmesser des Auslasslochs 33d.

Es sei angemerkt, dass das axiale Loch des Mundstücks 18 zusätzlich zu den beschriebenen Abschnitten bei der Stirnfläche 18c noch eine in der Strömungsrichtung an den dritten, engsten zylindrischen Lochabschnitt anschliessende, kurze zylindrische oder konische Erweiterung haben könnte, die dann zusammen mit dem engsten, zylindrischen Lochabschnitt den Flüssigkeitsauslass bilden würde. Ferner könnte das zylindrische Auslassloch 33d durch ein sich mindestens zum Teil in der Strömungsrichtung konisch erweiterndes Auslassloch ersetzt werden. Wenn der Flüssigkeitsauslass 24 und/oder das Auslassloch 33d derart modifiziert wird, soll die die engste Stelle des Auslasslochs begrenzende Begrenzung - d. h. Begrenzungsfläche oder Begrenzungskante - die die engste Stelle des Flüssigkeitsauslasses begrenzende Begrenzung des Flüssigkeitsauslasses und zum Beispiel auch dessen Mündung in axialer Blickrichtung oder Projektion allseitig in Abstand umschliessen. Ferner sollen die für die Durchmesser des Flüssigkeitsauslasses 24 und des Auslasslochs 33d angegebenen Verhältnisse und Werte für die Durchmesser der engsten Stellen des Flüssigkeitsauslasses 24 und des Auslasslochs 33d gelten.

Die Hülse 31 begrenzt zusammen mit dem Düsenkörper 17 einen Gasdurchgang 35, der den Gaseinlass 32c mit dem Auslassloch 33d verbindet und im allgemeinen zur Achse 16 koaxial ist. Der Gasdurchgang 35 hat einen sich vom Gaseinlass 32c bis zum zylindrischen Abschnitt 33a des zweiten Hülsenteils 32 erstreckenden, im Querschnitt ringförmigen, mehr oder weniger zur Achse 16 parallelen Abschnitt 35a. An diesem schliesst ein im Querschnitt ebenfalls ringförmiger Abschnitt 35b an. Dieser ist aussen durch den in der Strömungsrichtung zur Achse 16 hin geneigten, konischen Innenflächenabschnitt 33e des zweiten Hülsenteils 33 und innen durch einen abgestuften, teilweise konischen Teil der Aussenfläche des Düsenkörpers 17 begrenzt und nähert sich dementsprechend zum Auslassloch 33d hin im allgemeinen an die Achse 16 an. Bei der Stirnfläche 18c des Mundstücks 18 hat der Gasdurchgang dann einen durch die ebene Stirnfläche 18c und den ebenen Innenflächenabschnitt 33f der Stirnwand 33c begrenzten, kurzen, mehr oder weniger rechtwinklig sowie radial zur Achse 16 verlaufenden Abschnitt 35c. Das Auslassloch 33d bildet dann sowohl die Mündung des Gasdurchgangs 35 als auch eine Durchlassöffnung für den beim Betrieb aus dem Flüssigkeitsauslass 24 austretenden Flüssigkeitsstrahl.

Der Gasauslass 12 des Behälters 3 ist durch eine Leitung 41 und zwischen Stücken von dieser vorhandene Vorrichtungen mit dem Gaseinlass 11 des Behälters 3 verbunden. Die Leitung 41 enthält - der Reihe nach vom Gasauslass 12 zum Gaseinlass 11 hin - eine Absperr- und/oder Dosiervorrichtung 42 mit einer Klappe, einem Drucksensor 43, ein Nachentstauber-Filter 44, eine aus einem Drehkolbenverdichter, nämlich einem Roots-Gebläse sowie einem elektrischen Motor bestehende Gasumwälzvorrichtung 45, eine aus einem Durchlauferhitzer mit einem Wärmeaustauscher bestehende Heizvorrichtung 46, einen Temperatursensor 47, ein Filter 48 sowie eine Absperr-und/oder Dosiervorrichtung 49 mit einer Klappe. Der Behälter 3 bildet zusammen mit der Leitung 41 und den in dieser vorhandenen Vorrichtungen einen Gaskreislauf 51.

Eine Saugvorrichtung 55 zum teilweisen Evakuieren des Gaskreislaufes 51 und zur Rückgewinnung mindestens eines Lösungs- und/oder Dispersionsmittels besitzt eine Leitung 56, die an eine erste zwischen dem Nachentstauber-Filter 44 und dem Einlass der Gasumwälzvorrichtung 45 angeordnete Abzweigung der Leitung 41 angeschlossen und also mit dem Gaskreislauf 51 verbunden ist. Die Saugvorrichtung 55 besitzt beginnend bei der Abzweigung der Leitung 41 der Reihe nach einen ersten Kondensator 57, einen zweiten Kondensator 58, ein Absperr- und Dosierventil 59, eine durch eine Drehschieber-Vakuum-Pumpe gebildete Saugpumpe 60 mit einem elektrischen Motor, einen dritten Kondensator 61 und einen in die Umgebung mündenden Gasauslass 62. Jeder Kondensator 57, 58, 61 hat einen Wärmeaustauscher mit einem Durchgang für ein Kühlmittel und einen Kondensatauslass, der über ein Ventil 65 bzw. 68 bzw. 71 mit dem Einlass eines gegen die Umgebung abgeschlossenen Tanks 66 bzw. 69 bzw. 72 verbunden ist. Jeder Tank 66, 69, 72 hat einen Auslass mit einem Ventil 67 bzw. 70 bzw. 73 und bildet zusammen mit den beiden mit ihm verbunden Ventilen eine Schleuse. Die drei Kondensatoren dienen zusammen mit den an ihre Kondensatauslässe angeschlossenen Ventilen und Tanks als Mittel 75 zur Lösungsmittel- und/oder Dispersionsmittel-Rückgewinnung.

Die Leitung 41 hat zwischen dem Auslass der Gasumwälzvorrichtung 45 sowie den Gaseinlass 11 des Behälters 3 und - genauer gesagt - zwischen dem Temperatursensor 47 und dem Filter 48 eine zweite Abzweigung. Der Gaskreislauf 51 ist bei dieser durch eine Leitung 76 und eine Gasfördervorrichtung 77 mit dem Gaseinlass 32c der Sprühdüse 15 verbunden. Die Gasfördervorrichtung 77 besteht aus einem einstufigen Drehkolbenverdichter - nämlich einem Roots-Gebläse - mit einem elektrischen Motor.

Eine Flüssigkeitszufuhrvorrichtung 79 besitzt ein gegen die Umgebung abgeschlossendes Flüssigkeitsreservoir 80 mit einem Auslass 81 und einem Einlass 82. Der Auslass 81 ist durch eine Leitung 83 über eine einen elektrischen Motor aufweisende Pumpe 84, einen Pulsationsdämpfer 85, den ersten und zweiten Anschluss eines Dreiwegventils 86, ein Filter 87, einen Drucksensor 88 und eine Heizvorrichtung 89, die aus einem Durchlauferhitzer mit einem Wärmeaustauscher besteht, mit dem Flüssigkeitszuleitanschluss 21 der Sprühdüse 15 verbunden. Der Flüssigkeitsableitanschluss 22 der Sprühdüse 15 ist durch eine Leitung 90 über ein einstellbares Überströmventil 91 mit dem Einlass 82 des Flüssigkeitsreservoirs 80 verbunden. Ein dritter Anschluss des Dreiwegventils 86 ist über eine Bypass-Leitung 92 mit dem sich zwischen dem Überströmventil 91 und dem Einlass 82 befindenden Stück der Leitung 90 verbunden.

Die verschiedenen elektrischen Motoren, die Absperr-und/oder Dosiervorrichtungen 42, 49 die Ventile 59, 65, 67, 68, 70, 71, 73, 86 sowie eventuell 91, die Wärmeaustauscher der Heizvorrichtungen 46, 89, die Kondensatoren 57, 58, 61 und weitere Vorrichtungen sind elektrisch und/oder pneumatisch steuerbar. Die Einrichtung 1 weist noch eine Steuervorrichtung 94 auf. Diese besitzt elektronische und pneumatische Bauelemente, insbesondere Mess- und Regelschaltungen, Anzeige-und/oder Registrierinstrumente, Signalleuchten und manuell betätigbare Bedienungselemente. Die Steuervorrichtung 94 ist durch elektrische Leitungen, welche durch Pfeile mit voller Spitze angedeutet sind, mit den Sensoren 43, 47, 88 sowie anderen nicht gezeichneten Sensoren, mit den verschiedenen Motoren, elektrisch steuerbaren Stellorganen von Absperr- und Dosiervorrichtungen und sonstigen elektrisch steuerbaren Elementen der Einrichtung 1 verbunden. Die Steuervorrichtung 99 ist ferner durch Pneumatik-Leitungen, welche durch Pfeile mit hohler Spitze angedeutet sind, mit dem pneumatischen Stellorgan 27 und anderen, nicht gezeichneten, pneumatischen Stellorganen verbunden.

Nun werden Verfahren für die Behandlung von Teilchen 97 mit Hilfe der Einrichtung 1 beschrieben.

Bei der Benutzung der Einrichtung 1 werden zum Beispiel die Absperr- und/oder Dosiervorrichtungen 42, 49 vakuumdicht geschlossen, der Gut-Behälter 3 vorübergehend geöffnet und eine Charge der zu behandelnden, zum Beispiel mit einem Überzug zu versehenden Teilchen 97 in die Prozesskammer 9 eingebracht. Ferner wird eine Flüssigkeit 98 durch eine mit einem Deckel verschliessbare Offnung in das Flüssigkeitsreservoir 80 eingebracht.

Wenn der Behälter 3 nach dem Einbringen der Teilchen 101 wieder geschlossen wurde, enthält dieser Luft, deren Druck etwa gleich dem Umgebungs-Luftdruck ist. Der durch die beiden Absperr- und/oder Dosiervorrichtungen 42, 49 gegen den Behälter 3 abgeschlossene Teil der Leitung 41 und die in diesem Leitungsteil vorhandenen Vorrichtungen können ebenfalls noch Luft mit dem Umgebungs-Luftdruck oder - falls die Einrichtung vorher schon evakuiert und benutzt wurde - ein anderes Gas mit kleinerem Druck enthalten. Die Absperr-und/oder Dosiervorrichtungen 42, 49 werden nun wieder geöffnet. Ferner wird das Ventil 59 geöffnet und mit der Saugvorrichtung 55 in einer Vorbereitungs- und Evakuationsphase bei stillstehender Gasumwälzvorrichtung 45 und ohne Verwirbelung der Teilchen 97 Luft aus dem Gaskreislauf 51 abgesaugt, bis der Druck im Gaskreislauf 51 auf den vorgesehenen, zum Beispiel 10 kPa bis 30 kPa betragenden Sollwert reduziert ist. Danach wird das im Gaskreislauf vorhandene, zunächst mindestens noch zu einem grossen Teil aus Luft bestehende Gas mit der Gasumwälzvorrichtung 45 in der durch Pfeile mit hohler Spitze bezeichneten Richtung im Gaskreislauf 51 umgewälzt, so dass das Gas von unten nach oben durch den Behälter 3 und insbesondere durch die in diesem vorhandene Prozesskammer 9 strömt. Das durch die Prozesskammer strömende Gas verwirbelt und fluidisiert die Teilchen 97, so dass diese durch den Innenraum der Hülse 13 nach oben bewegt werden und ausserhalb der letzteren wieder nach unten sinken, wie es durch Pfeile mit vollen Spitzen angedeutet ist. Das im Gaskreislauf 51 umgewälzte Gas wird mit der Heizvorrichtung 46 erhitzt.

Beim Beginn der Verwirbelung der Teilchen 97 oder nach einer gewissen Verwirbelungsdauer wird mit der Sprühdüse 15 während einer Sprühphase kontinuierlich oder intermittierend Flüssigkeit 98 in der Prozesskammer 9 zersprüht, wobei mindestens ein Teil dieser Flüssigkeit auf die an der Sprühdüse vorbeibewegten Teilchen 97 aufgesprüht wird. Die Teilchen werden dabei zum Beispiel mit einem Überzug versehen. Nach der Sprühphase werden die Teilchen in einer Trocknungsphase getrocknet, wobei während der Trocknungsphase keine Flüssigkeit mehr zersprüht wird.

Die Steuervorrichtung 94 regelt die Temperatur des im Gaskreislauf 51 umgewälzten Gases vor und während der Sprühphase sowie bei der nachfolgenden Trocknungsphase. Die Temperatur des Gases kann zum Beispiel während der verschiedenen Behandlungsphasen auf einen einstellbaren, konstanten oder auf einen gemäss einem Programm zeitlich ändernden Sollwert geregelt werden. Die Temperatur des im Gaskreislauf umgewälzten Gases ist während der Sprühphase normalerweise dauernd oder mindestens zeitweise grösser als die sich beim vorhandenen Druck ergebende Siedetemperatur des in der zersprühten Flüssigkeit 98 enthaltenen Lösungs- und/oder Dispersionsmittels bzw. Lösungs- und/oder Dispersionsmittelgemischs und beträgt zum Beispiel etwa 40°C bis 80°C. Das umgewälzte Gas kann während der Trocknungsphase auf die gleiche Temperatur wie in der Sprühphase oder auf eine etwas höhere Temperatur erwärmt werden, die aber beispielsweise immer kleiner als 100°C ist.

Während der Sprühphase und während der Trocknungsphase verdampft mindestens ein Teil des in der zersprühten und mindestens zum Teil auf die Teilchen aufgesprühte Flüssigkeit vorhandene Lösungs- und/oder Dispersionsmittels, so dass in der Prozesskammer 9 überhitzter Lösungsmittel- und/oder Dispersionsmittel-Dampf entsteht. Dieser Dampf hat die Tendenz, den mit dem Drucksensor 43 gemessenen Druck und die Menge des im Gaskreislauf umgewälzten Gases zu erhöhen. Eine in der Steuervorrichtung 94 vorhandene Regelschaltung steuert nun das Absperr- und/oder Dosierventil 59 und/oder die Saugpumpe 60 derart, dass die Saugvorrichtung 55 Gas aus dem Gaskreislauf 51 absaugt und den Druck im letzteren auf dem vorgesehenen konstanten oder eventuell gemäss einem Programm variierenden Sollwert hält. Das mit der Saugvorrichtung 55 aus dem Gaskreislauf abgesaugte Gas wird im ersten, sich stromaufwärts von der Saugpumpe 60 und also auf der Vakuumseite von dieser befindenden Kondensator 57 mit einem durch diesen Wärmeaustauscher geleiteten Kühlfluid auf eine etwas mehr als 0°C und zum Beispiel ungefähr +1°C bis +10°C betragende Temperatur gekühlt, so dass allenfalls im Gas vorhandener Wasserdampf kondensiert und aus dem Gas ausgeschieden wird. Die Innenräume des zweiten, sich ebenfalls auf der Vakuumseite der Saugpumpe 60 befindenden Kondensators 58 und des dritten, sich stromabwärts von der Saugpumpe 60 und also auf deren Atmosphärenseite befindenden Kondensators 61 werden auf eine unter 0°C und vorzugsweise unter -20°C liegende, zum Beispiel bis ungefähr -40°C betragende Temperatur abgekühlt. Die beiden Kondensatoren 58, 61 kondensieren dann mindestens den grössten Teil des Dampfs des bzw. jedes im abgesaugten Gas vorhandenen, organischen Lösungs- und/oder Dispersionsmittels. Die in den Kondensatoren entstehenden Kondensate werden in den Tanks 66, 69, 72 gesammelt und können von Zeit zu Zeit aus diesen abgeleitet werden. Das bzw. jede im abgesaugten Gas vorhandene, organische und/oder aus Wasser bestehende Lösungs- und/oder Dispersionsmittel wird also mindestens im wesentlichen aus dem Gas ausgeschieden sowie zurückgewonnen und kann eventuell mindestens zum Teil wieder verwendet werden.

Die Luft in dem von der Saugvorrichtung 55 aus dem Gaskreislauf herausgesaugten Gas wird in die Umgebung abgeleitet. Die anfänglich im Gaskreislauf 51 vorhandene Luft wird beim Zersprühen von Flüssigkeit 98 sukzessiv durch Dampf des bzw. jedes in dieser vorhandenen Lösungs- und/oder Dispersionsmittels ersetzt. Das im Gaskreislauf umgewälzte Gas besteht zum Beispiel nach 10 Minuten dauerndem Zersprühen von Flüssigkeit und spätestens am Ende der Sprühphase zu mindestens 95 Vol.% aus Lösungs- und/oder Dispersionsmittel-Dampf.

Bei gewissen Behandlungen ist es vorteilhaft oder notwendig, dass das umgewälzte Gas schon beim Beginn der Verwirbelung zum grössten Teil und beispielsweise mehr oder weniger vollständig aus Dampf von mindestens einem organischen Lösungs- und/oder Dispersionsmittel besteht. Für solche Behandlungen kann man zum Beispiel nach dem Einbringen der Teilchen 97 in den Behälter 3 und nach dem Schliessen des letzteren in der Vorbereitungs- und/oder Evakuationsphase den Behälter 3 und den sich zwischen dessen Gausauslass 12 und der Umwälzvorrichtung 45 befindenden Abschnitt des Gaskreislaufs 51 oder den ganzen Gaskreislauf mit Hilfe der Saugvorrichtung 55 möglichst weitgehend evakuieren. Danach kann ein organisches Lösungsmittel oder Lösungsmittelgemisch zum Beispiel aus dem Flüssigkeitsreservoir 80 oder aus einem zusätzlichen Reservoir und eventuell durch einen zusätzlichen Einlass in flüssigem Zustand in Gaskreislauf eingebracht und in diesem verdampft werden oder bereits in Form von Dampf in den Gaskreislauf eingebracht werden. Die Menge dieses Dampfs kann zum Beispiel derart bemessen werden, dass sich im Gaskreislauf der gewünschte Druck ergibt. Falls der Luftanteil des im Gaskreislauf vorhandenen Gases ausreichend gering ist, kann dann mit dem Verwirbeln der Teilchen begonnen werden. Nötigenfalls kann von dem Beginn der Verwirbelung nochmals Gas aus dem Gaskreislauf abgesaugt und Lösungsmittel in diesen eingebracht werden.

Eine andere Möglichkeit besteht darin, den Behälter und nötigenfalls den ganzen Gaskreislauf nach dem Schliessen des Behälters zuerst mit Stickstoff oder einem anderen Inertgas zu spühlen, bevor Gas aus dem Gaskreislauf abgesaugt wird und bevor die Teilchen verwirbelt werden.

Wenn die Behandlung der Teilchen 97 beendet ist, d. h. wenn diese durch Besprühen mit einem Überzug versehen sowie danach getrocknet wurden, werden die Absperr- und/oder Dosiervorrichtungen 42, 49 geschlossen, der Behälter 3 vorübergehend geöffnet, die behandelten Teilchen aus diesem entnommen und zum Beispiel eine neue Charge von Teilchen in den Behälter eingebracht.

Nun werden einige Einzelheiten aer Zufuhr und Zersprühung von Flüssigkeit beschrieben. Das Dreiwegventil 86 wird nach dem Einfüllen der Flüssigkeit 98 in das Flüssigkeitsreservoir 80 beim Start der Pumpe 84 vorübergehend in eine Stellung gebracht, in der es den Auslass der Pumpe 84 über die Bypass-Leitung 92 mit dem Flüssigkeitsreservoir 80 verbindet, so dass die zum Beispiel aus einer Membranpumpe bestehende Pumpe 84 beim Pumpen von Flüssigkeit keinen grossen Gegendruck bzw. Strömungswiderstand überwinden muss und rasch gefüllt wird. Danach wird das Dreiwegventil 86 in die Stellung gebracht, in der es den Weg von der Pumpe 84 zum Filter 87 freigibt. Die Pumpe 84 pumpt während der Sprühphase beim kontinuierlich oder intermittierden Zersprühen von Flüssigkeit und eventuell auch während der Trocknungsphase sowie beim Auswechseln von Teilchen-Chargen dauernd Flüssigkeit 98 aus dem Flüssigkeitsreservoir 80 in den Flüssigkeitsdurchgang 23 der Sprühdüse 15. Im übrigen wird die zur Sprühdüse 15 gepumpte Flüssigkeit in der Heizvorrichtung 89 erwärmt.

Wenn die Pumpe 84 Flüssigkeit pumpt, aber keine Flüssigkeit zersprüht werden soll, wird das nadelförmige Verschlusselement 28 in seine Schliessstellung gebracht. Die von der Pumpe 84 in die Sprühdüse 15 gepumpte Flüssigkeit baut dann im Flüssigkeitsdurchgang 23 der Sprühdüse einen Druck auf, der durch das Überströmventil 91 festgelegt wird und zum Beispiel direkt an diesem manuell oder über die Steuervorrichtung 94 einstellbar ist. Wenn der Druck im Flüssigkeitsdurchgang 23 den vorgesehenen, zum Beispiel 3 MPa bis 6 MPa betragende Wert hat, strömt die Flüssigkeit über die Leitung 90 und das Überströmventil 91 wieder in das Flüssigkeitsreservoir 80 zurück.

Wenn Flüssigkeit zersprüht werden soll, wird das Verschlusselement 28 in die in der Fig. 2 gezeichnete Freigabestellung verschoben. Das Volumen des sich zwischen dem absperrbaren Ventilsitz 19 und dem Flüssigkeitsauslass 24 befindenden Abschnittes des Flüssigkeitsdurchgangs 23 ist wesentlich kleiner als das Volumen das restlichen Teil des Flüssigkeitsdurchgangs und auch als des Volumen des zwischen dem Auslass der Pumpe 84 und der Sprühdüse vorhandenen Teils der Leitung 83 und der in diesem Leitungsteil vorhandenen Vorrichtungen. Da dem Flüssigkeitsdurchgang 23 zudem schon vor dem Sprühbeginn - d. h. bei sich noch in der Schliessstellung befindenem Verschlusselement 28 - unter Druck stehende Flüssigkeit zuführt wurde, gelangt beim Sprühbeginn sehr schnell den vollen, vorgesehenen Sprühdruck aufweisende Flüssigkeit zum Flüssigkeitsauslass 24 der Sprühdüse. Die Pumpe 84 kann der Sprühdüse 15 zum Beispiel eine Flüssigkeitsmenge pro Zeiteinheit zuführen, die ein wenig grösser ist als die bei sich in der Freigabestellung befindendem Verschlusselement 28 durch den Flüssigkeitsauslass 24 zersprühte Flüssigkeit, so dass die Flüssigkeit im Flüssigkeitsdurchgang 23 auch beim Zersprühen den durch das Überströmventil 91 festgelegten Druck hat und die überschüssige Flüssigkeit über das Überströmventil in das Flüssigkeitsreservoir 80 zurückfliesst.

Die zersprühte Flüssigkeit bildet beim Austritt aus dem Flüssigkeitsauslass 24 der Sprühdüse 15 einen zur Achse 16 koaxialen Flüssigkeitsstrahl. Dieser gelangt durch das Auslassloch 33d der Hülse 31 hindurch in den freien Innenraum der Hülse 13 und damit in den Innenraum der Prozesskammer 9. Der Flüssigkeitsstrahl hat vorzugsweise die Form eines hohlen Kegels, bildet beim Austritt aus dem Flüssigkeitsauslass einen zusammenhängenden Flüssigkeitsfilm und zerflattert dann in Tröpfchen.

Im Gaskreislauf 51 entsteht zwischen der mit dem Einlass der Gasfördervorrichtung 77 verbundenen Abzweigung der Leitung 41 und der Prozesskammer 9 ein vor allem durch das Filter 48, die Absperr- und/oder Dosiervorrichtung 49 sowie den Siebboden 5 verursachtes Druckgefälle, das von der pro Zeiteinheit umgewälzten Gasmenge sowie von der Stellung der Klappe der Vorrichtung 49 abhängig ist und zum Beispiel ungefähr 1 kPa ungefähr 4 kPa beträgt. Die mit Hilfe der Steuervorrichtung 84 gesteuerte Gasfördervorrichtung 77 fördert beim Zersprühen von Flüssigkeit Gas aus dem sich zwischen dem Auslass der Heizvorrichtung 46 und der Absperr- und/oder Dosiervorrichtung 49 befindenden Abschnitt des Gaskreislaufs 51 zum Gaseinlass 32c der Sprühdüse 15. Die Gasfördervorrichtung 77 ergibt auch eine kleine Kompression des von ihr geförderten Gases und erhöht dessen Druck um beispielsweise ungefähr 5 kPa bis 6 kPa. Der Druck des von der Gasfördervorrichtung 77 in dem Gasdurchgang 35 der Sprühdüse geförderten Gases ist um einen Differenzdruck grösser als der Druck des die Prozesskammer in der Nähe der Sprühdüse 15 durchströmenden Gases. Der genannte Differenzdruck ist gleich der Summe des genannten, in einem Abschnitt des Gaskreislaufs entstehenden Druckgefälles sowie der von der Gasfördervorrichtung 77 erzeugten Druckerhöhung und beträgt dementsprechend ungefähr 6 bis 10 kPa.

Das der Sprühdüse 15 zugeführte Gas strömt im Abschnitt 35a des Gasdurchgangs 35 zuerst mehr oder weniger entlang der Achse 16. Das Gas nähert sich danach in dem aussen und teilweise auch innen durch geneigte Flächen begrenzten Abschnitt 35b des Gasdurchgangs 35 der Achse 16. Anschliessend strömt das Gas durch den zwischen der Stirnfläche 18c und der Stirnwand 33c vorhandenen Abschnitt 35c des Gasdurchgangs 35 ungefähr radial und ungefähr rechtwinklig zur Achse 16 gegen diese. Danach strömt das Gas zusammen mit dem Flüssigkeitsstrahl im allgemeinen in axialer Richtung aus dem Auslassloch 33d aus. Dieses Gas umhüllt das Mundstück 18 beim Flüssigkeitsauslass 24 und danach den Flüssigkeitsstrahl im Bereich des Auslasslochs 33d sowie im sich in dessen Nähe befindenden Bereich des freien Innenraums der Prozesskammer 9 in einem zur Achse 16 rechtwinkligen Querschnitt. Das durch die Sprühdüse und aus dieser heraus strömende Gas schirmt daher die Aussenflächen des Düsenkörpers 17 und insbesondere die Aussentlächen von dessen Mundstück 18 sowie auch die verschiedenen Flächen der Hülse 31 gegen die zersprühte Flüssigkeit ab. Das aus dem Auslassloch 33d ausströmende Gas verhindert also trotz seines relativ geringen Drucks, dass Flüssigkeitströpfchen in der Umgebung des Flüssigkeitsauslasses 24 aussen auf das Mundstück 18 oder auf die Hülse 31 auftreffen und an Mundstück 18 bzw. der Hülse 31 festhaften und trocknen. Es sei jedoch angemerkt, dass die Zerstäubung der Flüssigkeit im wesentlichen durch den Druck der Flüssigkeit bewirkt wird und dass das durch die Sprühdüse strömende Gas die Zerstäubung abgesehen von der beschriebenen Abschirmwirkung - anders als bei einer üblichen Zweistoffdüse - nicht oder nur sehr geringfügig beeinflusst und insbesondere auch die Grössen der Tröpfchen praktisch nicht beeinflusst.

Während der Sprühphase kann - wie schon erwähnt - entweder kontinuierlich oder intermittierend Flüssigkeit zersprüht werden. Im letzteren Fall fördert die Gasfördervorrichtung 77 zum Beispiel auch während der Zeitintervalle zwischen aufeinanderfolgenden Sprühvorgängen Gas zur Sprühdüse 15, das dann ohne Flüssigkeit durch das Auslassloch 33d ausströmt.

Die bei einem Sprühvorgang aus dem Auslassloch 33d herausgesprühte Flüssigkeit hat gleich wie das durch die Hülse 13 strömende Gas und die sich in dieser befindenden Teilchen 97 eine zur Achse 16 parallele, nach oben gerichtete Geschwindigkeitskomponente und wird also im allgemeinen im Gleichstrom zu dem durch die Hülse 13 strömenden Gas und den Teilchen 97 zersprüht. Das aus dem Auslassloch 33d der Sprühdüse 15 ausströmende Gas verhindert beim Zersprühen von Flüssigkeit auch weitgehend, dass besprühte Teilchen 97 an der Sprühdüse festkleben. Ferner kann das genannte Gas eventuell auch noch dazu beitragen, dass keine oder höchstens wenig Flüssigkeit auf die Innenfläche der Hülse 13 gelangt.

Die in den Behälter eingebrachten Teilchen 97 können zum Beispiel mindestens einen pharmazeutischen Wirkstoff - zum Beispiel den für verschiedene Versuche benutzten Wirkstoff, Theophyllin - und eventuell mindestens einen Hilfsstoff - wie zum Beispiel Stärke und/oder Mannit - aufweisen. Für die Bildung eines porenfreien, magensaftresistenten, sich erst im Darm auflösenden Überzuges kann die zersprühte und auf die Teilchen 97 aufgesprühte Flüssigkeit 98 zum Beispiel aus einer Lösung bestehen, die ein organisches Lösungsmittelgemisch mit 60 Vol.% Aceton und 40 Vol.% Ethanol und ein in diesem Lösungsmittelgemisch gelöstes Polymer, wie zum Beispiel Eudragit L100 (Hersteller: Röhm Pharma, Weiterstadt, Bundesrepublik Deutschland) aufweist.

Wenn die Teilchen mit einem Überzug versehen werden sollen, der eine verzögerte Wirkstofffreisetzung im Darm ergibt, kann zum Beispiel als Flüssigkeit 98 eine Lösung zersprüht werden, die ein organisches Lösungsmittelgemisch mit 80 Vol.% Toluol sowie 20 Vol.% Ethanol und als Polymer gelöste Ethylzellulose enthält, die unter der Bezeichnung Ethocel Standard 10 Premium von der Firma Dow Chemical, Midland, USA, erhältlich ist. Für die Bildung eines Ethylcellulose-Überzugs kann auch eine Dispersion zersprüht werden, die ein mindestens zum Teil aus Wasser bestehendes Dispersionsmittel und eine disperse Phase aus Latex und Ethylcellulose aufweist. Die Ethylcellulose- Lösung bzw. -Dispersion kann noch mindestens einen Weichmacher, wie Dibutylsebacat und/oder Dibutylphthalat aufweisen.

Zur Bildung eines porösen Überzugs kann zum Beispiel eine Polyvinylpyrrolidon-Lösung (PVP-Lösung) zersprüht werden Polyvinylpyrrolidon ist unter der Bezeichnung Kollidon K25 von der BASF AG, Ludwigshafen, Bundesrepublik Deutschland erhältlich und kann wahlweise in Wasser oder in einem organischen Lösungsmittel gelöst werden.

Ferner kann eine Hydroxypropylmethylcellulosephthalat-Lösung (HPMCP-Lösung) auf die Teilchen gesprüht werden, um auf diesen einen porösen Überzug zu bilden. Die Firma Shin-Etsu Chemical, Tokyo, Japan liefert verschiedene HPMCP-Modifikationen, die oberhalb verschiedener pH-Werte wasserlöslich sind.

Die Einrichtung 1 kann auch zum Agglomerieren von Teilchen benutzt werden, wobei dann die Hülse 13 vorzugsweise entfernt bzw. weggelassen wird. Die Sprühdüse könnte dann eventuell derart oberhalb des beim Verwirbeln von Teilchen von diesen gebildeten Wirbelschicht angeordnet werden, dass sie die Flüssigkeit abwärts sprüht. Ferner können mehrere Sprühdüsen vorgesehen werden.

Man kann man zum Agglomerieren von Teilchen eine Bindemittel-Lösung zersprühen, die mindestens ein organisches Lösungsmittel und/oder als Lösungsmittel dienendes Wasser aufweist. Falls die zu agglomerierenden Teilchen bereits ein sich in festem Zustand befindendes Bindemittel aufweisen, kann eine ausschliesslich aus einem oder mehreren organischen und/oder wässerigen Lösungsmittel(n) bestehende Flüssigkeit zersprüht werden, in der das Bindemittel löslich ist. Des weiteren besteht die Möglichkeit, die ursprünglich vorhandenen Teilchen zuerst zu agglomerieren und die dabei gebildeten Agglomerat- und/oder Granulat-Teilchen anschliessend noch mit einem Überzug zu versehen.

Die in der Fig. 4 ersichtliche Einrichtung 101 besitzt einen Gut-Behälter 103 mit einer vertikalen Achse 104. Der Behälter 103 enthält anstelle des Siebbodens 5 des Behälters 3 einen entlang der Achse 104 verstellbaren und um diese drehbaren Rotor 105, der als Hauptbestandteil eine ebene Scheibe aufweist und der durch eine ausserhalb des Behälters 103 angeordnete Antriebsvorrichtung 106 mit einem elektrischen Motor über ein unterhalb der Scheibe des Rotors 105 Behälter angeordnetes Winkelgetriebe gedreht werden kann. Der dicht gegen die Umgebung abgeschlossene Innenraum 107 des Behälter 101 hat eine sich unter der Scheibe des Rotors befindende Gaseinlasskammer 108 und eine an die obere Seite des Rotors angrenzende Prozesskammer 109. Im übrigen besitzt der Behälter 103 einen in die Gaseinlasskammer 108 mündenden Gaseinlass 111 und einen sich beim oberen, nicht sichtbaren Ende des Behälters befindenden Gasauslass. Ferner ist mindestens eine Sprühdüse 115 vorhanden. Diese ragt ein wenig oberhalb der Scheibe des Rotors 105 in die Prozesskammer 109 hinein und ist derart horizontal angeordnet, dass ihre Achse bei ihrem zum Zersprühen von Flüssigkeit dienenden Ende ungefähr tangential zu einem zur Achse 104 koaxialen Kreis ist. Im übrigen ist die Sprühdüse 115 ähnlich wie die Sprühdüse 15 ausgebildet.

Die Einrichtung 101 besitzt einen zum Teil vom Behälter 103 gebildeten Gaskreislauf mit einer Gasumwälzvorrichtung, eine Saugvorrichtung eine Gasfördervorrichtung und eine Flüssigkeitszufuhrvorrichtung. Diese Teile der Einrichtung 101 sind ähnlich ausgebildet sowie miteinander und mit der Sprühdüse 115 verbunden wie die entsprechenden Teile der Einrichtung 1.

Bei der Benutzung der Einrichtung 101 wird eine Charge von Teilchen 117 in die Prozesskammer 109 eingebracht und anschliessend mit der Saugvorrichtung Gas aus dem Gaskreislauf abgesaugt, so dass der Druck im Gaskreislauf zum Beispiel auf 5 kPa bis 30 kPa reduziert wird. Ferner wird der Rotor 105 angehoben, so dass seine vorher an der Wandung des Behälters 103 anliegende Scheibe in die in der Fig. 4 ersichtliche Stellung gelangt, in der zwischen der Wandung des Behälters und der Scheibe ein Ringspalt vorhanden ist. Des weiteren wird mit der Gasumwälzvorrichtung Gas im Gaskreislauf umgewälzt, so dass dieses Gas in die Gaseinlasskammer 108 und danach durch den genannten Ringspalt und die Prozesskammer 109 nach oben zum Gasauslass strömt. Zudem wird gleichzeitig der Rotor 105 gedreht. Die Teilchen 117 liegen dann zum Teil auf dem Rotor auf und werden durch diesen um die Achse 104 herum und durch die dabei entstehende Zentrifugalkraft nach aussen bewegt. Wenn die Teilchen in einen sich in der Nähe des genannten Ringspalts befindenen Raumbereich gelangen, werden sie durch das nach oben strömende Gas angehoben und mehr oder weniger verwirbelt sowie fluidisiert. Die Sprühdüse 115 ragt in das von den Teilchen gebildete Bett hinein. Beim Bewegen der Teilchen wird während einer Sprühphase mit der Sprühdüse kontinuierlich oder intermittierend Flüssigkeit im Teilchen-Bett zersprüht und auf die Teilchen aufgesprüht. Ferner fördert die Gasfördervorrichtung gleichzeitig Gas aus dem Gaskreislauf zur Sprühdüse. Dieses Gas tritt dann zusammen mit der zersprühten Flüssigkeit aus dem Auslassloch der Sprühdüse 115 aus. Die Teilchen 117 können in der Sprühphase mit einem Überzug versehen und/oder agglomeriert und danach in einer Trocknungsphase getrocknet werden. Soweit vorgängig nichts anderes geschrieben wurde, wird die Behandlung der Teilchen 117 mit der Einrichtung 101 ähnlich durchgeführt wie die Behandlung der Teilchen 97 mit der Einrichtung 1, wobei sich auch ähnliche Vorteile ergeben.

Die Einrichtungen und Verfahren können noch in anderer Weise geändert werden.

Wie schon erwähnt, könnte das zylindrische Auslassloch 33d der Hülse der Sprühdüse durch ein sich mindestens zum Teil nach aussen konisch erweiterndes Auslassloch ersetzt werden. Ferner könnte die ebene Aussenfläche der Stirnwand 33c durch eine stetig an die Aussenfläche des konischen Abschnitts 33b des zweiten Hülsenteils 33 anschliessende, konische und/oder im Axialschnitt konvex gebogene Fläche ersetzt werden, die sich mindestens annähernd bis zum äusseren Rand des Auslasslochs der Hülse der Sprühdüse erstreckt.

Zudem können die an den Gasdurchgang 35 und insbesondere an dessen Abschnitte 35b, 35c sowie an das Auslassloch 33d angrenzenden Kanten des Düsenkörpers 17 und/oder der mehrteiligen Hülse 31 mindestens zum Teil durch gebogene Übergangsflächen ersetzt werden.

Ferner könnte die ebene, zur Achse 16 rechtwinklige Stirnfläche 18c des Mundstückes 18 und/oder der ebenfalls ebene, zur Achse 16 rechtwinkligen Innenflächenabschnitt 33f der Stirnwand 33c durch eine konische oder im Axialschnitt gebogene Fläche ersetzt werden, die zur Achse 16 hin gegen das Auslassloch 33d geneigt ist. Die Stirnfläche 18c des Düsenkörpers und der Innenflächenabschnitt der Stirnwand 33c des kappenförmigen Hülsenteils 33 sollten jedoch bei derartigen Varianten einander gegenüberstehende Abschnitte haben, die mit der Achse 16 einen Winkel bilden, der vorzugsweise mindestens 60° und zum Beispiel mindestens 75° beträgt und also höchstens 30° bzw. höchstens 15° von 90° abweicht, so dass das durch den Abschnitt 35c des Gasdurchgangs 35 zum Auslassloch 33d strömende Gas immer noch einen grossen Winkel mit der Achse 16 bildet.

Des weiteren können die Einrichtungen mit Mitteln versehen werden, um kontinuierlich Teilchen in die Prozesskammer einzubringen und aus dieser zu entnehmen. Man kann dann zum Beispiel Gas mit einem Druck von 5 kPa bis 30 kPa im Gaskreislauf umwälzen und eine Lösung in die Prozesskammer hineinsprühen, deren Tröpfchen nach dem Trocknen Teilchen bilden. Diese könnte dann nach dem Trocknen und/oder nach einer zusätzlichen Behandlung, bei der sie mit einem Überzug versehen und/oder agglomeriert werden, kontinuierlich über eine Schleuse aus der Prozesskammer heraus gefördert werden.

Ferner kann man eventuell sogar die Gasförderpumpe 77 durch eine Verbindungsleitung oder ein Dosierventil ersetzen und zwischen der mit der Gasfördervorrichtung 77 verbundenen Abzweigung und dem Gaseinlass 11 des Behälters 3 noch eine Drossel vorsehen. Diese kann dann zusammen mit dem Filter 48, der Absperr- und/oder Dosiervorrichtung 49 und dem Siebboden 5 ein so grosses Druckgefälle erzeugen, dass ohne Gasfördervorrichtung 77 eine ausreichende Gasmenge aus der Leitung 41 zum Gaseinlass der Sprühdüse strömt. Eine analoge Modifikation ist auch bei der Einrichtung 101 möglich.

## Patentansprüche

1. Verfahren zum Herstellen und/oder Behandeln von Teilchen (97, 117), wobei in einem eine Prozesskammer (9, 109) und eine Gasumwälzvorrichtung (45) aufweisenden Gaskreislauf (51) Gas umgewälzt wird und wobei beim Umwälzen von Gas mindestens zeitweise eine Flüssigkeit (98) mindestens einer Sprühdüse (15, 115) zugeführt und durch einen in einem Düsenkörper (17) der Sprühdüse (15, 115) vorhandenen Flüssigkeitsauslass (24) in der Prozesskammer (9, 109) zersprüht wird, um die Teilchen (97, 117) in der Prozesskammer (9, 109) zu bilden und/oder zu behandeln, wobei mindestens beim Zersprühen von Flüssigkeit (98) Gas aus dem Gaskreislauf (51) zu einem Gasdurchgang (35) der Sprühdüse (15, 115) geleitet und durch diesen in die Prozesskammer (9, 109) geleitet wird, dadurch gekennzeichnet, dass dem Gaskreislauf (51) mindestens zeitweise mit einer Saugvorrichtung (55) Gas entzogen wird, so dass der Druck des Gases in der Prozesskammer (9, 109) mindestens beim Zersprühen von Flüssigkeit (98) unter dem Umgebungs-Luftdruck liegt und höchstens 80 kPa beträgt, dass die Flüssigkeit (98) der Sprühdüse (15, 115) mit einem Druck von mindestens 500 kPa zugeführt wird, dass das dem Gasdurchgang (35) der Sprühdüse (15, 115) zugeleitete Gas einen Druck hat, der höchstens 20 kPa grösser ist als der Druck des Gases in der Prozesskammer (9, 109), und dass der Gasdurchgang (35) der verwendeten Sprühdüse (15, 115) einen deren Düsenkörper (17) im Bereich des Flüssigkeitsauslasses (24) im Querschnitt umschliessenden Abschnitt (35b) hat, so dass das durch den Gasdurchgang (35) geleitete Gas die aus dem Flüssigkeitsauslass (24) herausgesprühte Flüssigkeit (98) im Querschnitt umhüllt, um die Aussenfläche des Düsenkörpers (17) gegen die zersprühte Flüssigkeit abzuschirmen.

2. Verfahren nach Anspruch 1, dadurch gekennzeichnet, dass ausser dem genannten, dem Gasdurchgang (35) der Sprühdüse (15, 115) zugeleiteten Gas kein anderes Gas in die Sprühdüse (15, 115) hineingeleitet wird, so dass die Zersprühung der Flüssigkeit (98) im wesentlichen durch den Druck der letzteren bewirkt wird, wobei die Flüssigkeit beim Zersprühen in dem an den Flüssigkeitsauslass (24) anschliessenden Raumbereich zum Beispiel einen hohlen Kegel bildet.

3. Verfahren nach Anspruch 1 oder 2, dadurch gekennzeichnet, dass der Druck des dem Gasdurchgang (35) der Sprühdüse (15, 115) zugeführten Gases um höchstens 15 kPa und beispielsweise höchstens 10 kPa grösser ist als der Druck des in der Prozesskammer (9, 109) vorhandenen Gases.

4. Verfahren nach einem der Ansprüche 1 bis 3, dadurch gekennzeichnet, dass das umgewälzte Gas mindestens zeitweise auf eine Temperatur gebracht wird, bei welcher mindestens ein Teil der Flüssigkeit in Dampf umgewandelt wird, dass der Druck des Gases im ganzen Gaskreislauf (51) und in der Sprühdüse (15, 115) spätestens ab dem Beginn der Zersprühung von Flüssigkeit bis zur Beendung der Umwälzung von Gas dauernd auf einem höchstens 80 kPa und vorzugsweise höchstens 50 kPa und zum Beispiel höchstens 30 kPa betragenden Wert gehalten wird.

5. Verfahren nach einem der Ansprüche 1 bis 4, dadurch gekennzeichnet, dass die zersprühte Flüssigkeit (98) mindestens ein organisches Lösungs- und/oder Dispersionsmittel aufweist, dass das im Gaskreislauf (51) umgewälzte Gas mindestens zeitweise auf eine Temperatur gebracht wird, bei welcher von dem bzw. jedem in der zersprühten Flüssigkeit enthaltenen, organischen Lösungs- und/oder Dispersionsmittel Dampf entsteht, dass die Drücke des im Gaskreislauf (51) umgewälzten Gases und des mindestens beim Zersprühen von Flüssigkeit in den Gasdurchgang (38) der Sprühdüse (15, 115) geleiteten Gases spätestens ab dem Beginn der Zersprühung von Flüssigkeit bis zur Beendung der Umwälzung von Gas in ganzen Gaskreislauf (51) und in der Sprühdüse (15, 115) auf Werten gehalten werden, die kleiner sind als ein Mindestzünddruck, bei dem ein Gemisch aus Luft und Dampf von dem bzw. jedem in der zersprühten Flüssigkeit vorhandenen, organischen Lösungs- und/oder Dispersionsmittel zur Explosion gebracht werden kann, und dass in dem dem Gaskreislauf (51) entzogenen Gas vorhandener Lösungsmittel- und/oder Dispersionsmittel-Dampf kondensiert und das dabei entstehende, flüssige Lösungs- und/oder Dispersionsmittel gesammelt wird.

6. Verfahren nach Anspruch 4 oder 5, dadurch gekennzeichnet, dass die Prozesskammer (9, 109) durch einen Behälter (3, 103) mit einem mit der Prozesskammer (9, 109) verbundenen Gaseinlass (11, 111) und einem mit der Prozesskammer (9, 109) verbundenen Gasauslass (12) begrenzt wird, dass der Entzug von Gas aus dem Gaskreislauf (51) bei einer Abzweigung von diesem erfolgt, die sich zwischen dem Gasauslass (12) des Behälters (3, 103) und der Gasumwälzvorrichtung (45) befindet und dass das zur Sprühdüse (15, 115) geleitete Gas aus dem Gaskreislauf (51) bei einer Abzweigung abgezweigt wird, die sich zwischen der Gasumwälzvorrichtung (45) und dem Gaseinlass (11, 111) des Behälters (3, 103) befindet.

7. Verfahren nach einem der Ansprüche 1 bis 6, dadurch gekennzeichnet, dass das von der Gasumwälzvorrichtung (45) im Gaskreislauf (51) umgewälzte Gas von unten nach oben durch die Prozesskammer (9, 109) geleitet wird, dass die Teilchen (97, 117) beim Zersprühen von Flüssigkeit durch das umgewälzte Gas verwirbelt und/oder mit einem die Prozesskammer (9, 109) an deren unterem Ende begrenzenden Rotor (105) bewegt werden und dass das vom Gaskreislauf (51) zur Sprühdüse (15, 115) geleitete Gas zwischen dem Gaskreislauf (51) und dem Gasdurchgang (35) der Sprühdüse (15, 115) durch eine Gasfördervorrichtung (77) gefördert wird.

8. Verfahren nach Anspruch 7, dadurch gekennzeichnet, dass die Gasfördervorrichtung (77) den Druck des von ihr geförderten Gases höchstens 10 kPa und zum Beispiel mindestens 1 kPa erhöht.

9. Verfahren nach einem der Ansprüche 1 bis 8, dadurch gekennzeichnet, dass die Sprühdüse (15, 115) eine Achse (16) definiert, dass das Gas durch einen sich in bezug auf die Strömungsrichtung der Flüssigkeit (98) stromabwärts vom Flüssigkeitsauslass (24) befindenden Abschnitt (35c) des Durchgangs (35) strömt, der auf seiner dem Düsenkörper (17) abgewandten Seite mindestens zum Teil durch einen Innenflächenabschnitt (33f) der Sprühdüse (15) begrenzt ist, der mit der Achse (16) einen Winkel von 60° bis 90°, vorzugsweise von 75° bis 90° und zum Beispiel 90° bildet, dass die Flüssigkeit und das Gas durch ein sich stromabwärts vom Flüssigkeitsauslass (24) befindendes Auslassloch (33d) aus der Sprühdüse (15, 115) ausströmen und dass die Begrenzung der engsten Stelle des Auslasslochs (33d) die Begrenzung der engsten Stelle des Flüssigkeitsauslasses (24) in einer zur Achse (16) parallelen Blickrichtung um die Achse (16) herum allseitig mit Abstand umschliesst.

10. Einrichtung zum Herstellen und/oder Behandeln von Teilchen (97, 117), mit einer Prozesskammer (9, 109) zum Aufnehmen der Teilchen (97, 117), mit einer zusammen mit der Prozesskammer (9, 109) einen Gaskreislauf (51) bildenden Gasumwälzvorrichtung (45), um Gas durch den Gaskreislauf (51) und die Prozesskammer (9, 109) umzuwälzen, mit mindestens einer zum Zersprühen einer Flüssigkeit (98) in der Prozesskammer (9, 109) dienenden Sprühdüse (15, 115), die einen Düsenkörper (17) und einen Flüssigkeitsdurchgang (23) mit einem vom Düsenkörper (17) begrenzten Flüssigkeitsauslass (24) aufweist, mit einer mit dem Flüssigkeitsdurchgang (23) der Sprühdüse (15, 115) verbundenen Flüssigkeitszufuhrvorrichtung (79) und mit Mitteln (76, 77), um Gas aus dem Gaskreislauf (51) zum Gasdurchgang (35) der Sprühdüse (15, 115) und durch diese hindurch in die Prozesskammer (9, 109) zu leiten, dadurch gekennzeichnet, dass der Gasdurchgang (35) einen den Düsenkörper (17) im Bereich des Flüssigkeitsauslasses (24) im Querschnitt umschliessenden Abschnitt (35b) aufweist, dass eine mit dem Gaskreislauf (51) verbundene Saugvorrichtung (55) vorhanden ist, um Gas aus dem Gaskreislauf (51) abzusaugen und in diesem einen unter dem Umgebungs-Luftdruck liegenden Gas-Druck zu erzeugen, dass ein Drucksensor (43) zum Messen des Druckes im Gaskreislauf (51) und eine mit dem Drucksensor (43) sowie der Saugvorrichtung (55) verbundene Steuervorrichtung (94) vorhanden sind, dass die letztere ausgebildet ist, um die Saugvorrichtung (55) derart zu steuern, dass der Gas-Druck in der Prozesskammer (9, 109) mindestens während der Zersprühung von Flüssigkeit höchstens 80 kPa beträgt, und dass die genannten Mittel (76, 77) ausgebildet sind, um das Gas dem Gasdurchgang der Sprühdüse (15, 115) mit einem Druck zuzuführen, der höchstens 20 kPa grösser ist als der Druck des Gases in der Prozesskammer (9, 109).

11. Einrichtung nach Anspruch 10, dadurch gekennzeichnet, dass die Sprühdüse (15, 115) eine den Flüssigkeitsauslass (24) durchdringende Achse (16) definiert und eine zusammen mit dem Düsenkörper (17) den genannten Abschnitt (35b) des Gasdurchgangs (35) begrenzende Hülse (31) aufweist, dass diese einen Innenflächenabschnitt (33f) besitzt, der sich in bezug auf die Strömungsrichtung der bei der Benutzung der Sprühdüse (15, 115) durch den Flüssigkeitsauslass (24) strömenden Flüssigkeit (98) stromabwärts vom Flüssigkeitsauslass (24) und in Abstand vom Düsenkörper (17) befindet und mit der Achse (16) einen Winkel von 60° bis 90° und vorzugsweise 75° bis 90° bildet, dass die Hülse (31) ein in bezug auf die Strömungsrichtung der Flüssigkeit (98) stromabwärts vom Flüssigkeitsauslass (24) angeordnetes, zum letzteren koaxiales Auslassloch (33d) besitzt und dass die Begrenzung der engsten Stelle des Auslasslochs (33d) die Begrenzung der engsten Stelle des Flüssigkeitsauslasses (24) in einer zur Achse (16) parallelen Blickrichtung um die Achse (16) herum allseitig mit Abstand umschliesst.

12. Einrichtung nach Anspruch 11, dadurch gekennzeichnet, dass der Düsenkörper (17) eine um die Mündung des Flüssigkeitsauslasses (24) herum an diese angrenzende Stirnfläche (18c) hat, die mindestens zum Teil eben und zur Achse (16) rechtwinklig ist und dass der genannte Innenflächenabschnitt (33f) der Hülse (31) mindestens zum Teil eben und zur Achse (16) rechtwinklig ist.

13. Einrichtung nach Anspruch 11 oder 12, dadurch gekennzeichnet, dass der Flüssigkeitsauslasses (21) und das Auslassloch (33d) der Hülse (31) in einer zur Achse (16) parallelen Blickrichtung kreisförmig sind und dass der Durchmesser der engsten Stelle des Auslasslochs (33d) mindestens das Fünffache, und zum Beispiel mindestens das Zehnfache des Durchmessers der engsten Stelle des Flüssigkeitsauslasses (34) beträgt.

14. Einrichtung nach einem der Ansprüche 10 bis 13, dadurch gekennzeichnet, dass die genannten Mittel (76, 77) eine den Gaskreislauf (51) mit dem Gasdurchgang (35) der Sprühdüse (15, 115) verbindende Gasfördervorrichtung (77) aufweisen, die vorzugsweise durch einen einstufigen Drehkolbenverdichter, zum Beispiel durch ein Roots-Gebläse gebildet ist.

15. Einrichtung nach Anspruch 14, dadurch gekennzeichnet, dass ein die Prozesskammer (9, 109) begrenzender Behälter (3, 103) vorhanden ist, der einen mit der Prozesskammer (9, 109) verbundenen Gaseinlass (11, 111) und einen mit der Prozesskammer (9, 109) verbundenen Gasauslass (12) besitzt, dass die Saugvorrichtung (55) bei einer zwischen dem Gasauslass (12) des Behälters (3, 103) und der Gasumwälzvorrichtung (45) angeordneten Abzweigung des Gaskreislaufs (51) mit diesem verbunden ist und dass die Gasfördervorrichtung (77) bei einer zwischen der Gasumwälzvorrichtung (45) und dem Gaseinlass (11, 111) des Behälters (3, 103) angeordneten Abzweigung des Gaskreislaufs (51) mit diesem verbunden ist.

16. Einrichtung nach einem der Ansprüche 10 bis 15, dadurch gekennzeichnet, dass die Saugvorrichtung (55) und die genannten Mittel (76, 77) ausgebildet sind, um im Gaskreislauf (51) und in der Sprühdüse (15, 115) einen Druck zu erzeugen und aufrecht zu erhalten, der höchstens 50 kPa und zum Beispiel höchstens 30 kPa beträgt, und dass die Saugvorrichtung (55) Mittel (75) zur Lösungsmittel- und/oder Dispersionsmittel-Rückgewinnung aufweist.

## Claims

1. Process for the production and/or treatment of particles (97, 117), gas being circulated in a gas circulation (51) having a process chamber (9, 109) and a gas circulation device (45) and, during circulation of gas, a liquid (98) being fed at least from time to time to at least one spray nozzle (15, 115) and being sprayed into the process chamber (9, 109) through a liquid outlet (24) present in a nozzle body (17) of the spray nozzle (15, 115) in order to form and/or to treat the particles (97, 117) in the process chamber (9, 109) and, at least during spraying of liquid (98), gas being passed from the gas circulation (51) to a gas passage (35) of the spray nozzle (15, 115) and being passed into the process chamber (9, 109) through said gas passage, characterized in that gas is withdrawn, at least from time to time, from the gas circulation (51) by means of a suction device (55) so that the pressure of the gas in the process chamber (9, 109), at least during atomization of the liquid (98), is below the ambient air pressure and is at most 80 kPa, that the liquid (98) is fed to the spray nozzle (15, 115) at a pressure of at least 500 kPa, that the gas passed to the passage (35) of the spray nozzle (15, 115) has a pressure which is at most 20 kPa greater than the pressure of the gas in the process chamber (9, 109), and that the gas passage (35) of the spray nozzle (15, 115) used has a section (35b) which, in cross-section, surrounds the nozzle body (17) of said spray nozzle in the region of the liquid outlet (24), so that the gas passed through the gas passage (35) envelopes, in cross-section, the liquid (98) sprayed out of the liquid outlet (24), in order to shield the outer surface of the nozzle body (17) from the sprayed liquid.

2. Process according to Claim 1, characterized in that, apart from said gas passed into the gas passage (35) of the spray nozzle (15, 115), no other gas is passed into the spray nozzle (15, 115), so that the spraying of the liquid (98) is effected essentially by pressure of the latter, during spraying the liquid forming, for example, a hollow cone in the space adjacent to the liquid outlet (24).

3. Process according to Claim 1 or 2, characterized in that the pressure of the gas fed to the gas passage (35) of the spray nozzle (15, 115) is at most 15 kPa and, for example, at most 10 kPa greater than the pressure of the gas present in the process chamber (9, 109).

4. Process according to any of Claims 1 to 3, characterized in that the circulated gas is brought, at least from time to time, to a temperature at which at least a part of the liquid is converted into vapour, that the pressure of the gas in the entire gas circulation (51) and in the spray nozzle (15, 115) is kept continuously at a value of at most 80 kPa and preferably at most 50 kPa and, for example, at most 30 kPa from the beginning of the spraying of liquid at the latest until the end of the circulation of gas.

5. Process according to any of Claims 1 to 4, characterized in that the sprayed liquid (98) contains at least one organic solvent and/or dispersant, that the gas circulated in the gas circulation (51) is brought, at least from time to time, to a temperature at which the or each solvent and/or dispersant contained in the sprayed liquid is converted into vapour, that, from the beginning of spraying of the liquid at the latest until the end of the circulation of gas, the pressures of the gas circulated in the gas circulation (51) and of the gas passed into the gas passage (38) of the spray nozzle (15, 115) at least during spraying of liquid are kept, in the entire gas circulation (51) and in the spray nozzle (15, 115), at values which are lower than a minimum ignition pressure at which a mixture of air and vapour of the or each organic solvent and/or dispersant present in the spray liquid can be caused to explode, and that solvent and/or dispersant vapour present in the gas withdrawn from the gas circulation (51) is condensed and the resulting, liquid solvent and/or dispersant is collected.

6. Process according to Claim 4 or 5, characterized in that the process chamber (9, 109) is bounded by a container (3, 103) having a gas inlet (11, 111) connected to the process chamber (9, 109) and a gas outlet (12) connected to the process chamber (9, 109), that the withdrawal of gas from the gas circulation (51) is effected at a branch thereof which is located between the gas outlet (12) of the container (3, 103) and the gas circulation device (45), and that the gas passed to the spray nozzle (15, 115) is withdrawn from the gas circulation (51) at a branch which is located between the gas circulation device (45) and the gas inlet (11, 111) of the container (3, 103).

7. Process according to any of Claims 1 to 6, characterized in that the gas circulated by the gas circulation device (45) in the gas circulation (51) is passed upwards from below through the process chamber (9, 109), that, during spraying of liquid, the particles (97, 117) are fluidized by the circulated gas and/or are moved by means of a rotor bounding the process chamber at its lower end, and that the gas passed from the gas circulation (51) to the spray nozzle (15, 115) is transported by a gas transport device (77) between the gas circulation (51) and the gas passage (35) of the spray nozzle (15, 115).

8. Process according to Claim 7, characterized in that the gas transport device (77) increases the pressure of the gas transported by it by at most 10 kPa and, for example, at least 1 kPa.

9. Process according to any of Claims 1 to 8, characterized in that the spray nozzle (15, 115) defines an axis (16), that the gas flows through a section (35c) of the passage (35), which section is located downstream of the liquid outlet (24) relative to the direction of flow of the liquid (98) and is bounded on its side facing away from the nozzle body (17) at least partly by an inner surface section (33f) of the spray nozzle (15), said inner surface section making an angle of 60° to 90°, preferably of 75° to 90° and, for example, 90° with the axis (16), that the liquid and the gas flow out of the spray nozzle (15, 115) through an outlet hole (33d) located downstream of the liquid outlet (24), and that the boundary of the narrowest point of the outlet hole (33d) surrounds the boundary of the narrowest point of the liquid outlet (24) at a distance all around the axis (16) in a direction of view parallel to the axis (16).

10. Apparatus for the production and/or treatment of particles (97, 117), having a process chamber (9, 109) for receiving the particles (97, 117), having a gas circulation device (45) forming a gas circulation (51) together with the process chamber (9, 109) in order to circulate gas through the gas circulation (51) and the process chamber (9, 109), having at least one spray nozzle (15, 115) which serves for spraying a liquid (98) into the process chamber (9, 109) and possesses a nozzle body (17) and a liquid passage (23) with a liquid outlet (24) bounded by the nozzle body (17), having a liquid feed device (79) connected to the liquid passage (23) of the spray nozzle (15, 115), and having means (76, 77) for passing gas from the gas circulation (51) to the gas passage (35) of the spray nozzle (15, 115) and through the latter into the process chamber (9, 109), characterized in that the gas passage (35) has a section (35b) which, in cross-section, surrounds the nozzle body (17) in the region of the liquid outlet (24), that a suction device (55) connected to the gas circulation (51) is present for sucking gas out of the gas circulation (51) and generating in said circulation a gas pressure below the ambient air pressure, that a pressure sensor (43) for measuring the pressure in the gas circulation (51) and a control device (94) connected to the pressure sensor (43) and to the suction device (55) are present, that said control device is formed in order to control the suction device (55) in such a way that the gas pressure in the process chamber (9, 109) is at most 80 kPa at least during the spraying of liquid, and that said means (76, 77) are formed in order to feed gas to the gas passage of the spray nozzle (15, 115) at a pressure which is at most 20 kPa greater than the pressure of the gas in the process chamber (9, 109).

11. Apparatus according to Claim 10, characterized in that the spray nozzle (15, 115) defines an axis (16) passing through the liquid outlet (24) and has a sleeve (31) which, together with the nozzle body (17), bounds said section (35b) of the gas passage (35), that said sleeve has an inner surface section (33f) which is located downstream of the liquid outlet (24) at a distance away from the nozzle body (17), relative to the direction of flow of the liquid (98) flowing through the liquid outlet (24) when the spray nozzle (15, 115) is in use, and makes an angle of 60° to 90° and, preferably 75° to 90° with the axis (16), that the sleeve (31) has an outlet hole (33d) arranged downstream of the liquid outlet (24) relative to the direction of flow of the liquid (98) and coaxial with said liquid outlet, and that the boundary of the narrowest point of the outlet hole (33d) surrounds the boundary of the narrowest point of the liquid outlet (24) at a distance all around the axis (16) in a direction of view parallel to the axis (16).

12. Apparatus according to Claim 11, characterized in that the mouthpiece (17) has an end surface (18c) which bounds the orifice of the liquid outlet (24) all around and is at least in part flat and at right angles to the axis (16), and that said inner surface section (33f) of the sleeve (31) is at least partly flat and at right angles to the axis (16).

13. Apparatus according to Claim 11 or 12, characterized in that the liquid outlet (21) and the outlet hole (33d) of the sleeve (31) are circular in a direction of view parallel to the axis (16) and that the diameter of the narrowest point of the outlet hole (33d) is at least five times and, for example, at least ten times the diameter of the narrowest point of the liquid outlet (34).

14. Apparatus according to any of Claims 10 to 13, characterized in that said means (76, 77) have a gas transport device (77) which connects the gas circulation (51) to the gas passage (35) of the spray nozzle (15, 115) and is preferably formed by a one-stage rotary piston compressor, for example by a Roots blower.

15. Apparatus according to Claim 14, characterized in that a container (3, 103) which bounds the process chamber (9, 109) and has a gas inlet (11, 111) connected to the process chamber (9, 109) and a gas outlet (12) connected to the process chamber (9, 109) is present, that the suction device (55) is connected to the gas circulation (51) at a branch of said gas circulation which is arranged between the gas outlet (12) of the container (3, 103) and the gas circulation device (45), and that the gas transport device (77) is connected to the gas circulation (51) at a branch of said gas circulation which is arranged between the gas circulation device (45) and the gas inlet (11, 111) of the container (3, 103).

16. Apparatus according to any of Claims 10 to 15, characterized in that the suction device (55) and said means (76, 77) are formed in order to generate and maintain in the gas circulation (51) and in the spray nozzle (15, 115) a pressure which is at most 50 kPa and, for example, at most 30 kPa, and that the suction device (55) has means (75) for solvent and/or dispersant recovery.

## Revendications

1. Procédé de fabrication et/ou de traitement de particules (97, 117), où, dans un circuit de gaz (51) présentant une chambre de processus (9, 109) et un dispositif de circulation de gaz (45), du gaz est mis en circulation et où, lors de la circulation du gaz, au moins par moments un liquide (98) est amené à au moins une buse de pulvérisation (15, 115) et pulvérisé dans la chambre de processus (9, 109) par une évacuation de liquide (24) existant dans un corps de buse (17) de la buse de pulvérisation (15, 115), afin de constituer et/ou de traiter les particules (97, 117) dans la chambre de processus (9, 109), où au moins lors de la pulvérisation de liquide (98), du gaz est dirigé depuis le circuit de gaz (51) vers un passage de gaz (35) de la buse de pulvérisation (15, 115) et est dirigé, au moyen de celui-ci, dans la chambre de processus (9, 109), caractérisé en ce que, au moins par moments, du gaz est prélevé à l'aide d'un dispositif d'aspiration (55), depuis le circuit de gaz (51), si bien que la pression du gaz dans la chambre de processus (9, 109), au moins lors de la pulvérisation du liquide (98), est située à une valeur inférieure à la pression d'air ambiante et est au plus de 80 kPa, en ce que le liquide (98) est amené à la buse de pulvérisation (15, 115) à une pression d'au moins 500 kPa, en ce que le gaz amené au passage de gaz (35) est amené à la buse de pulvérisation (15, 115) à une pression qui est au maximum de 20 kPa supérieure à la pression du gaz se trouvant dans la chambre de processus (9, 109), et en ce que le passage de gaz (35), de la buse de pulvérisation (15, 115) utilisée, a un tronçon (35b) entourant en section transversale son corps de buse (17), dans la zone de l'évacuation de liquide (24), de manière que le gaz dirigé à travers le passage de gaz (35) enveloppe en section transversale le liquide (98) pulvérisé hors de l'évacuation de liquide (24), afin d'isoler la surface extérieure du corps de buse (17) vis-à-vis du liquide pulvérisé.

2. Procédé selon la revendication 1, caractérisé en ce qu'outre le gaz cité, amené au passage de gaz (35) de la buse de pulvérisation (15, 115), aucun autre gaz n'est introduit dans la buse de pulvérisation (15, 115), de manière que la pulvérisation du liquide (98) soit provoquée essentiellement par la pression de ce dernier, le liquide constituant, lors de la pulvérisation dans la zone spatiale connexe à l'évacuation de liquide (24), par exemple une forme en cône creux.

3. Procédé selon la revendication 1 ou 2, caractérisé en ce que la pression du gaz amené au passage de gaz (35) de la buse de pulvérisation (15, 115) est supérieure d'au plus 15 kPa et, par exemple, d'au plus 10 kPa à la pression du gaz se trouvant dans la chambre de processus (9, 109).

4. Procédé selon l'une des revendications 1 à 3, caractérisé en ce que le gaz mis en circulation est porté au moins par moments à une température pour laquelle au moins une partie du liquide est convertie en vapeur, en ce que la pression du gaz dans la totalité du circuit de gaz (51) et dans la buse de pulvérisation (15, 115), au plus tard à partir du moment de la pulvérisation du liquide jusqu'à l'achèvement de la circulation du gaz, est maintenue de façon durable à une valeur au maximum de 80 kPa et de préférence au maximum de 50 kPa et, par exemple, au maximum de 30 kPa.

5. Procédé selon l'une des revendications 1 à 4, caractérisé en ce que le liquide (98) pulvérisé présente au moins un agent solvant et/ou un agent dispersant organique(s), en ce que le gaz mis en circulation dans le circuit de gaz (51) est porté, au moins par moments, à une température pour laquelle de la vapeur est produite à partir de l'agent, respectivement de chaque agent, solvant et/ou dispersant organique(s) contenu dans le liquide pulvérisé, en ce que les pressions du gaz mis en circulation dans le circuit de gaz (51), et du gaz dirigé, au moins lors de la pulvérisation de liquide dans le passage de gaz (38) de la buse de pulvérisation (15, 115), au plus tard à partir du début de la pulvérisation du liquide jusqu'à l'achèvement de la mise en circulation du gaz, dans la totalité du circuit de gaz (51) et dans la buse de pulvérisation (15, 115), sont maintenues à des valeurs inférieures à une pression d'allumage minimale pour laquelle le mélange constitué d'air et de vapeur de l'agent, respectivement de chaque agent, solvant et/ou dispersant organique(s) existant dans le liquide pulvérisé peuvent être portés à l'explosion, et en ce que la vapeur d'agent solvant et/ou d'agent dispersant, existant dans le gaz extrait du circuit de gaz (51), est condensée et l'agent solvant et/ou dispersant liquide alors produits sont collectés.

6. Procédé selon la revendication 4 ou 5, caractérisé en ce que la chambre de processus (9, 109) est délimitée par un récipient (3, 103) avec une entrée de gaz (11, 111) reliée à la chambre de processus (9, 109) et une évacuation de gaz (12) reliée à la chambre de processus (9, 109), en ce que l'extraction du gaz depuis le circuit de gaz (51) s'effectue à une ramification depuis celui-ci qui se trouve entre l'évacuation de gaz (12) du récipient (3, 103) et le dispositif de circulation de gaz (45), et en ce que le gaz dirigé vers la buse de pulvérisation (15, 115) est évacué par ramification à partir du circuit de gaz (51), en un point de ramification qui se trouve entre le dispositif de circulation de gaz (45) et l'entrée de gaz (11, 111) du récipient (3, 103).

7. Procédé selon l'une des revendications 1 à 6, caractérisé en ce que le gaz mis en circulation par le dispositif de circulation de gaz (45) dans le circuit de gaz (51) est dirigé du bas vers le haut en passant à travers la chambre de processus (9, 109), en ce que les particules (97, 117), lors de la pulvérisation du liquide, sont mises en tourbillonnement par l'effet du gaz mis en circulation et/ou sont déplacées avec un rotor (105) délimitant la chambre de processus (9, 109) à son extrémité inférieure, et en ce que le gaz dirigé du circuit de gaz (51) à la buse de pulvérisation (15, 115) est véhiculé entre le circuit de gaz (51) et le passage de gaz (35) de la buse de pulvérisation (15, 115), au moyen d'un dispositif de transport de gaz (77).

8. Procédé selon la revendication 7, caractérisé en ce que le dispositif de transport de gaz (77) augmente la pression du gaz transporté par lui au plus de 10 kPa et par exemple au moins de 1 kPa.

9. Procédé selon l'une des revendications 1 à 8, caractérisé en ce que la buse de pulvérisation (15, 115) définit un axe (16), en ce que le gaz s'écoule à travers un tronçon (35c) du passage (35) se trouvant par rapport à la direction d'écoulement du liquide (98) en aval de l'évacuation de liquide (24), tronçon délimité sur son côté opposé au corps de buse (17) au moins en partie par un tronçon de surface intérieure (33f) de la buse de pulvérisation (15) qui constitue avec l'axe (16) un angle de 60 à 90°, de préférence de 75 à 90° et, par exemple, de 90°, en ce que le liquide et le gaz sortent hors de la buse de pulvérisation (15, 115) en passant par un trou d'échappement (33d) se trouvant en aval de l'évacuation de liquide (24), et en ce que la délimitation du lieu le plus étroit du trou d'évacuation (33d) entoure la délimitation du lieu le plus étroit de l'évacuation de liquide (24) de tous côtés, à distance, autour de l'axe (16), vu dans une direction d'observation parallèle à l'axe (16).

10. Dispositif de fabrication et/ou de traitement de particules (97, 117) avec une chambre de processus (9, 109) destinée à recevoir des particules (97, 117) avec un dispositif de circulation de gaz (45) constituant conjointement avec la chambre de processus (9, 109) un circuit de gaz (51), afin de mettre en circulation du gaz dans le circuit de gaz (51) et la chambre de processus (9, 109), avec au moins une buse de pulvérisation (15, 115) servant à la pulvérisation d'un liquide (98) dans la chambre de processus (9, 109) et présentant un corps de buse (17) et un passage de liquide (23) avec une évacuation de liquide (24) délimitée par le corps de buse (17), avec un dispositif d'amenée de liquide (79) relié au passage de liquide (23) de la buse de pulvérisation (15, 115) et avec des moyens (76, 77) pour diriger du gaz sortant du circuit de gaz (51) vers le passage de gaz (35) de la buse de pulvérisation (15, 115) et en passant à travers celle-ci le diriger dans la chambre de processus (9, 109), caractérisé en ce que le passage de gaz (35) présente un tronçon (35b) entourant en section transversale le corps de buse (17) dans la zone de l'évacuation de liquide (24), en ce qu'un dispositif d'aspiration (55) relié au circuit de gaz (51) est prévu, afin d'aspirer du gaz depuis le circuit de gaz (51) et de générer dans celui-ci une pression de gaz inférieure à la pression de l'air ambiant, en ce qu'un capteur de pression (43), destiné à la mesure de la pression dans le circuit de gaz (51), et un dispositif de commande (94), relié au capteur de pression (43) ainsi qu'au dispositif d'aspiration (51), sont prévus, en ce que le dispositif de commande (94) est réalisé pour commander le dispositif d'aspiration (55), de manière que la pression de gaz dans la chambre de processus (9, 109) soit au plus de 80 kPa au moins pendant la pulvérisation du liquide, et en ce que les moyens (76, 77) cités sont réalisés pour amener le gaz au passage de gaz de la buse de pulvérisation (15, 115) à une pression qui est au plus de 20 kPa supérieure à la pression du gaz dans la chambre de processus (9, 109).

11. Dispositif selon la revendication 10, caractérisé en ce que la buse de pulvérisation (15, 115) définit un axe (16) traversant l'évacuation de liquide (24) et présente une douille (31) délimitant, conjointement avec le corps de buse (17), le tronçon (35b) cité du passage de gaz (35), en ce que cette douille comporte un tronçon de surface intérieure (33f) qui se trouve, par rapport à la direction d'écoulement du liquide (98) s'écoulant lors de l'utilisation de la buse de pulvérisation (15, 115) à travers l'évacuation de liquide (24), en un point situé en aval de l'évacuation de liquide (24) et à distance du corps de buse (17) et fait avec l'axe (16) un angle de 60° à 90° et de préférence de 75° à 90°, en ce que la douille (31) comporte en aval de l'évacuation de liquide (24), par rapport à la direction d'écoulement du liquide (98), un trou d'évacuation (33d) coaxial par rapport à cette évacuation, et en ce que la délimitation du lieu le plus étroit du trou d'évacuation (33d) entoure la délimitation du lieu le plus étroit de l'évacuation de liquide (24) de tous côtés, à distance, autour de l'axe (16), vu dans une direction d'observation parallèle à l'axe (16).

12. Dispositif selon la revendication 11, caractérisé en ce que le corps de buse (17) comporte une face frontale (18c) autour de l'embouchure de l'évacuation de liquide (24) adjacente à celle-ci, qui est au moins en partie plane et perpendiculaire à l'axe (16) et en ce que le troncon de surface intérieure (33f) cité de la douille (31) est au moins en partie plan et perpendiculaire par rapport à l'axe (16).

13. Dispositif selon la revendication 11 ou 12, caractérisé en ce que l'évacuation de liquide (21) et le trou d'évacuation (33d) de la douille (31) sont en forme de cercle dans une direction d'observation parallèle à l'axe (16) et en ce que le diamètre du lieu le plus étroit du trou d'évacuation (33d) est d'au moins le quintuple et par exemple d'au moins le décuple du diamètre du lieu le plus étroit de l'évacuation de liquide (34).

14. Dispositif selon l'une des revendications 10 à 13, caractérisé en ce que les moyens (76, 77) cités présentent un dispositif de transport de gaz (77) reliant le circuit de gaz (51) au passage de gaz (35) de la buse de pulvérisation (15, 115) qui est constitué de préférence par un compresseur à piston rotatif à un étage, par exemple une soufflante de type Roots.

15. Dispositif selon la revendication 14, caractérisé en ce qu'est prévu un récipient (3, 103) délimitant la chambre de processus (9, 109) et comportant une entrée de gaz (11, 111) reliée à la chambre de processus (9, 109) et une sortie de gaz (12) reliée à la chambre de processus (9, 109), en ce que le dispositif d'aspiration (55), à l'emplacement d'une ramification disposée entre l'évacuation de gaz (12) du récipient (3, 103) et le dispositif de circulation de gaz (45), est relié à celui-ci et en ce que le dispositif de transport de gaz (77), à l'emplacement d'une ramification de départ du circuit de gaz (51), disposée entre le dispositif de circulation de gaz (45) et l'entrée de gaz (11, 111) du récipient (303), est relié à celui-ci.

16. Dispositif selon l'une des revendications 10 à 15, caractérisé en ce que le dispositif d'aspiration (55) et les moyens (76, 77) cités sont réalisés pour générer et conserver, dans le circuit de gaz (51) et dans la buse de pulvérisation (15, 115), une pression qui est au plus de 50 kPa et, par exemple, au plus de 30 kPa, et en ce que le dispositif d'aspiration (55) présente des moyens (75) destinés à la récupération d'agent solvant et/ou d'agent dispersant.
